# EUROPEAN PATENT APPLICATION

(11) **EP 4 589 977 A1**
(43) Date of publication of application: **23.07.2025**
(21) Application number: 23896271.6
(22) Date of filing: 10.10.2023
(51) Int. Cl.: H04N 23/65, G06F 3/01, G06F 3/04883

(54) **GESTURE SENSING METHOD, DEVICE AND STORAGE MEDIUM**

(30) Priority: 30.11.2022 CN 202211521522
(71) Applicant: Honor Device Co., Ltd., Shenzhen, Guangdong 518040 (CN)
(72) Inventor: LI, Jingwei, Shenzhen, Guangdong 518040 (CN); CHEN, Daiting, Shenzhen, Guangdong 518040 (CN); HUANG, Libo, Shenzhen, Guangdong 518040 (CN)
(74) Representative: Goddar, Heinz J.
(86) International application number: PCT/CN2023/123841
(87) International publication number: WO 2024/114115

(57) **Abstract**

This application provides a gesture sensing method, a device, and a storage medium, relates to the field of terminal technologies and artificial intelligence, and further relates to the technical fields such as intelligent sensing and intelligent control. The method includes: A camera runs in a first mode after an electronic device enables a gesture sensing function. When it is detected that a gesture exists in a range of the camera, the electronic device controls the camera to run in a second mode. The electronic device obtains an image acquired by the camera in the second mode, recognizes a specific category of a gesture in the image, and then performs a preset operation corresponding to the category of the gesture, for example, taking a screenshot, pausing or playing a video, or playing a next or previous short video, thereby implementing a function of intelligently sensing the gesture, and improving use experience of a user.

## Description

This application claims priority to Chinese Patent Application No. 202211521522.7, filed with the China National Intellectual Property Administration on November 30, 2022 and entitled "GESTURE SENSING METHOD, DEVICE, AND STORAGE MEDIUM", which is incorporated herein by reference in its entirety.

### TECHNICAL FIELD

This application relates to the field of terminal technologies, and in particular, to a gesture sensing method, a device, and a storage medium.

### BACKGROUND

A conventional contact human-computer interaction manner means that a user implements a human-computer interaction function by using a touch keyboard, a mouse, a graphics tablet, a touch screen, a physical key, or the like. With development of a human-computer interaction technology of an intelligent terminal, the user may control the intelligent terminal through an air gesture operation, that is, in a non-contact human-computer interaction manner.

In the related art, a user starts a camera application, and may control a camera to take a photo through an air gesture operation. To implement the function, a terminal needs to continuously perform gesture recognition, which has high requirements for a camera device and a processor. In addition, the user also has air operation requirements in more scenarios in which it is inconvenient to touch a screen of the terminal, for example, during driving a vehicle, and when fingers are unclean.

Therefore, there is an urgent need for a gesture sensing solution, to reduce power consumption of a device while satisfying more requirements of the user.

### SUMMARY

Embodiments of this application provide a gesture sensing method, a device, and a storage medium, to reduce power consumption of a device while intelligently sensing an air gesture and controlling the device.

According to a first aspect, an embodiment of this application provides a gesture sensing method, applied to an electronic device. In the method, a camera of the electronic device runs in a first mode; the electronic device obtains a first image acquired by the camera in the first mode, and detects whether a gesture exists in the first image; the electronic device detects that the gesture exists in the first image, and controls the camera to switch from the first mode to a second mode; the electronic device obtains a second image acquired by the camera in the second mode, and recognizes a category of a gesture in the second image; and the electronic devices recognizes that the gesture in the second image is a target gesture, and controls to perform a preset operation corresponding to the target gesture.

In an example, resolution of the first image is less than resolution of the second image, and/or a frame rate of the first image is less than a frame rate of the second image.

In the solution, the camera continuously acquires the first image in the first mode, switches to the second mode if it is detected that the gesture exists in the first image, continuously acquires the second image in the second mode, and recognizes the category of the gesture in the second image, to control to perform an operation corresponding to the category of the gesture. In this way, functions of intelligently sensing an air gesture and controlling the device are implemented, and convenience is provided when it is inconvenient for a user to touch the device. In addition, the first image acquired by the camera in the first mode is obtained, and whether a gesture exists is detected. Then, through switching of a camera mode, the second image acquired by the camera in the second mode is obtained, and the specific category of the gesture is recognized. In this way, power consumption of the device can be reduced to a certain extent.

In an optional embodiment of the first aspect, before a camera of the electronic device runs in a first mode, the method further includes: responding, by the electronic device, to a first operation of enabling a gesture sensing function.

In the solution, a condition for starting the camera by the device is limited, and if the condition is satisfied, the device is triggered to perform the gesture sensing solution.

In an optional embodiment of the first aspect, before a camera of the electronic device runs in a first mode, the method further includes: detecting that a status of the electronic device satisfies a first condition, where the first condition includes at least one of the following: a screen status of the electronic device is an on state; the electronic device has been unlocked; a time difference between an optical signal emitted by an optical proximity sensor of the electronic device and a reflected signal of the optical signal is greater than a first threshold, and/or signal strength of the reflected signal is less than a second threshold, and/or the receive light sensor has not received the reflected signal; detected data of an ambient light sensor of the electronic device is greater than a third threshold; a screen of the electronic device faces a preset direction; or the electronic device runs a preset application.

In the solution, the condition for starting the camera by the device is further limited. In addition to that the user enables the gesture sensing function, the first condition is added, to prevent the camera from continuously acquiring the first image when unnecessary, thereby reducing the power consumption of the device. The unnecessary may be understood as any scenario in which the camera cannot acquire a gesture.

In an optional embodiment of the first aspect, the electronic device is a foldable device, the foldable device includes an inner screen and an outer screen, a first camera is correspondingly arranged on the inner screen, and a second camera is correspondingly arranged on the outer screen; and that a camera of the electronic device runs in a first mode includes: controlling the second camera to run in the first mode when it is detected that the outer screen of the electronic device is in an on state and the electronic device is in a folded state; or controlling the first camera to run in the first mode when it is detected that the inner screen of the electronic device is in an on state and the electronic device is in an unfolded state.

The solution may be applied to the foldable device. If a corresponding screen (the inner screen or the outer screen) is in the on state when the device is in the folded state or the unfolded state, a camera on the screen in the on state may be controlled to be started, to detect whether a gesture exists in a range of the camera, thereby implementing gesture sensing.

In an optional embodiment of the first aspect, before the controlling the first camera to run in the first mode or the controlling the second camera to run in the first mode, the method further includes: detecting that a status of the electronic device satisfies a second condition, where the second condition includes at least one of the following: the electronic device has been unlocked; a time difference between an optical signal emitted by an optical proximity sensor of the electronic device and a reflected signal of the optical signal is greater than a first threshold, and/or signal strength of the reflected signal is less than a second threshold, and/or the receive light sensor has not received the reflected signal; detected data of an ambient light sensor of the electronic device is greater than a third threshold; the inner screen or the outer screen of the electronic device faces a preset direction; or the electronic device runs a preset application.

In the solution, the condition for starting the camera by the device is further limited. In addition to that the user enables the gesture sensing function and the corresponding screen is turned on when the screen of the electronic device is in the folded state or the unfolded state, the second condition is added, to prevent the camera from continuously acquiring the first image when unnecessary, thereby reducing the power consumption of the device.

In an optional embodiment of the first aspect, the method further includes: when the second camera runs in the first mode, if it is detected that the electronic device is from the folded state to the unfolded state, controlling, by the electronic device, the first camera to run in the first mode, and closing the second camera; or when the first camera runs in the first mode, if it is detected that the electronic device is from the unfolded state to the folded state, controlling, by the electronic device, the first camera to be closed, and controlling the second camera to run in the first mode.

In the solution, when other conditions remain unchanged, if the user changes a physical status of the screen of the device, for example, from the folded state to the unfolded state or from the unfolded state to the folded state, the first image may be continuously acquired by switching the camera. In this way, the functions of intelligently sensing the air gesture and controlling the device can also be implemented when the screen of the device is in a new physical status.

In an optional embodiment of the first aspect, the target gesture includes a first gesture and a second gesture, the first gesture is a start gesture of the target gesture, and the second gesture is an end gesture of the target gesture; and the recognizing, by the electronic device, that the gesture in the second image is the first gesture, and controlling, by the electronic device, to perform a preset operation corresponding to the target gesture includes: recognizing, by the electronic device, that the gesture in the second image is the first gesture, and controlling the camera to switch from the second mode to a third mode; obtaining, by the electronic device, a third image acquired by the camera in the third mode, and recognizing a category of a gesture in the third image; and recognizing, by the electronic device, that the gesture in the third image is the second gesture, and controlling, by the electronic device, to perform the preset operation corresponding to the target gesture.

In an example, the resolution of the second image is less than or equal to resolution of the third image, and/or the frame rate of the second image is less than a frame rate of the third image.

In the solution, the target gesture includes the start gesture and the end gesture. If the start gesture and the end gesture are sequentially recognized, the electronic device may control to perform the preset operation corresponding to the target gesture, for example, taking a screenshot, or controlling audio and video playback.

In an optional embodiment of the first aspect, that a camera of the electronic device runs in a first mode includes: sending, by a sensing module of the electronic device, a first indication to a second processing module of the electronic device, where the first indication indicates the second processing module to detect whether a gesture exists in a range of the camera; sending, by the second processing module, a first shooting instruction to the camera; and running, by the camera, in the first mode in response to the first shooting instruction.

In an optional embodiment of the first aspect, that the electronic device obtains a first image acquired by the camera in the first mode, and detects whether a gesture exists in the first image includes: obtaining, by the second processing module of the electronic device, the first image acquired by the camera in the first mode, and detecting whether the gesture exists in the first image.

In an optional embodiment of the first aspect, that the electronic device detects that the gesture exists in the first image, and controls the camera to switch from the first mode to a second mode includes: detecting, by the second processing module of the electronic device, that the gesture exists in the first image, and sending, by the second processing module, a first message to the sensing module of the electronic device, where the first message notifies the sensing module that the gesture exists in the range of the camera; sending, by the sensing module, a second indication to a first processing module of the electronic device, where the second indication indicates the first processing module to recognize the category of the gesture in the second image; and sending, by the first processing module, a second shooting instruction to the camera in response to the second indication, where the second shooting instruction indicates the camera to run in the second mode.

In an optional embodiment of the first aspect, that the electronic device obtains a second image acquired by the camera in the second mode, and recognizes a category of a gesture in the second image includes: obtaining, by the first processing module of the electronic device, the second image acquired by the camera in the second mode, and recognizing the category of the gesture in the second image.

In an optional embodiment of the first aspect, that the electronic devices recognizes that the gesture in the second image is a target gesture, and controls to perform a preset operation corresponding to the target gesture includes: recognizing, by the first processing module of the electronic device, that the gesture in the second image is the target gesture, and sending, by the first processing module, a second message to the sensing module of the electronic device, where the second message indicates that the target gesture is recognized in the second image; sending, by the sensing module, a third indication to a target application of the electronic device, where the third indication indicates the target gesture; and controlling, by the target application, to perform the preset operation corresponding to the target gesture.

In an optional embodiment of the first aspect, a second processing module of the electronic device detects the status of the electronic device.

In an optional embodiment of the first aspect, the controlling, by the electronic device, the camera to switch from the second mode to a third mode includes: controlling, by a first processing module of the electronic device, the camera to switch from the second mode to the third mode; the obtaining, by the electronic device, a third image acquired by the camera in the third mode, and recognizing a category of a gesture in the third image includes: obtaining, by the first processing module, the third image acquired by the camera in the third mode, and recognizing the category of the gesture in the third image; and if the gesture in the third image is the second gesture, the controlling, by the electronic device, to perform a preset operation corresponding to the target gesture includes: if the gesture in the third image is the second gesture, sending, by the first processing module, a third message to a sensing module of the electronic device, where the third message indicates that the target gesture is recognized; sending, by the sensing module, a fourth indication to a target application of the electronic device, where the fourth indication indicates the target gesture; and controlling, by the target application, to perform the preset operation corresponding to the target gesture.

The foregoing optional embodiments show an interaction process of underlying modules of the electronic device, so that the functions of sensing the air gesture and controlling to performing a corresponding operation by the device are implemented, thereby improving user experience of the user.

According to a second aspect, an embodiment of this application provides an electronic device. The electronic device includes: a camera, a memory, and a processor, where the camera is configured to acquire images with different frame rates and/or resolution, and the processor is configured to invoke a computer program in the memory, to perform the gesture sensing method according to any one of descriptions in the first aspect.

In an optional embodiment of the second aspect, the processor includes a first processing module and a second processing module, and power consumption of the first processing module is higher than power consumption of the second processing module; the second processing module is configured to detect whether a gesture exists in a range of the camera; and the first processing module is configured to recognize a category of the gesture in the range of the camera.

According to a third aspect, an embodiment of this application provides an electronic device. The electronic device includes units, modules, or circuits configured to perform the method according to any one of descriptions in the first aspect.

According to a fourth aspect, an embodiment of this application provides a computer-readable storage medium. The computer-readable storage medium stores computer instructions. When the computer instructions are run on an electronic device, the electronic device is enabled to perform the method according to any one of descriptions in the first aspect.

According to a fifth aspect, an embodiment of this application provides a chip. The chip includes a processor. The processor is configured to invoke a computer program in a memory, to perform the method according to any one of descriptions in the first aspect.

According to a sixth aspect, a computer program product is provided, including a computer program. When the computer program is run, a computer is enabled to perform the method according to any one of descriptions in the first aspect.

It should be understood that, the technical solutions of the second aspect to the sixth aspect of this application correspond to those of the first aspect of this application, and the beneficial effects obtained by the aspects and the corresponding feasible implementations are similar, and details are not described again.

### BRIEF DESCRIPTION OF DRAWINGS

FIG. 1 is a schematic diagram of a gesture sensing method according to an embodiment of this application;
FIG. 2 to FIG. 4 are schematic diagrams of a target gesture according to an embodiment of this application;
FIG. 5A to FIG. 5F are schematic diagrams of an interface according to an embodiment of this application;
FIG. 6 is a schematic diagram of a gesture sensing method according to an embodiment of this application;
FIG. 7 is a schematic diagram of dynamic frame adjustment according to an embodiment of this application;
FIG. 8 is a schematic diagram of a structure of an electronic device according to an embodiment of this application;
FIG. 9 is a schematic diagram of a structure of an electronic device according to an embodiment of this application;
FIG. 10 is a schematic diagram of a structure of an SoC according to an embodiment of this application;
FIG. 11 is a schematic diagram of a structure of an electronic device according to an embodiment of this application;
FIG. 12 is a schematic flowchart of a gesture sensing method according to an embodiment of this application;
FIG. 13 is a schematic diagram of hand nodes according to an embodiment of this application;
FIG. 14 is a schematic flowchart of a gesture sensing method according to an embodiment of this application;
FIG. 15 is a schematic flowchart of a gesture sensing method according to an embodiment of this application;
FIG. 16 is a schematic diagram of a structure of an electronic device according to an embodiment of this application;
FIG. 17 is a schematic diagram of a structure of a chip according to an embodiment of this application;
FIG. 18A is a schematic diagram of a change of an interface of a mobile phone according to an embodiment of this application;
FIG. 18B is a schematic diagram of a change of an interface of a mobile phone according to an embodiment of this application;
FIG. 18C is a schematic diagram of a change of an interface of a mobile phone according to an embodiment of this application;
FIG. 19 is a schematic diagram of a structure of a mobile phone with a foldable screen according to an embodiment of this application; and
FIG. 20 is a schematic flowchart of a gesture sensing method according to an embodiment of this application.

### DESCRIPTION OF EMBODIMENTS

For ease of describing the technical solutions in embodiments of this application clearly, in embodiments of this application, terms such as "first" and "second" are used to distinguish same or similar items with a basically same function and role. For example, a first image and a second image are merely used to distinguish images with different frame rates or resolution, and are not intended to limit a sequence thereof. For another example, a first indication and a second indication are merely used to distinguish different indications. A person skilled in the art may understand that the terms such as "first" and "second" do not limit a quantity or an execution sequence, and the terms such as "first" and "second" do not indicate a definite difference.

It should be noted that, in embodiments of this application, the term "example" or "for example" or the like is used to represent giving an example, an illustration, or a description. Any embodiment or design solution described as an "example" or "for example" in this application should not be explained as being more preferred or having more advantages than another embodiment or design solution. Exactly, use of the term such as "example" or "for example" is intended to present a related concept in a specific manner.

In embodiments of this application, "at least one" means one or more, and "a plurality of" means two or more. "And/or" describes an association relationship for describing associated objects and represents that three relationships may exist. For example, A and/or B may represent that: only A exists, both A and B exist, and only B exists, where A and B may be singular or plural. The character "/" generally indicates an "or" relationship between the associated objects. "At least one of the following" or a similar expression thereof refers to any combination of these items, including one item or any combination of a plurality of items. For example, at least one of a, the mechanical type b, or c may represent a, b, c, "a and b", "a and c", "b and c", or "a, b, and c", where a, b, and c may be singular or plural.

Some terms in this application are first explained and described below, to facilitate understanding of a person skilled in the art.

A frame rate (frame rate) is a quantity of images acquired or transmitted by a camera in one second, and is usually represented by fps (that is, frames per second). In embodiments of this application, the camera acquires an image at a first frame rate in a first mode, and acquires an image at a second frame rate in a second mode, where the first frame rate is less than the second frame rate. In some embodiments, the camera acquires an image at a third frame rate in a third mode, where the third frame rate is greater than the second frame rate.

Resolution, namely, image resolution, refers to an amount of information stored in an image, and refers to a quantity of pixels per inch of image. Units of the resolution include: dpi (dots per inch), ppi (pixels per inch), and the like.

A lightweight neural network is a lighter model having performance not worse than that of a heavier model, thereby implementing a hardware-friendly neural network. Light/heavy herein generally refers to a scale or a quantity of parameters of a model. Commonly used lightweight neural network technologies include distillation, pruning, quantization, weight sharing, low-rank decomposition, attention module light quantization, a dynamic network architecture/training manner, and lighter network architecture design, which are not limited in embodiments of this application.

Background subtraction (background subtraction) is a relatively widely used type of method in a moving object detection technology. A basic idea of the background subtraction is similar to that of an inter-frame differential method, in which a target area is extracted by using a differential operation of different images. Different from the inter-frame differential method, the background subtraction does not refer to subtracting a current frame image from an adjacent frame image, but subtracting the current frame image from a continuously updated background model, to extract a moving target from a differential image. In embodiments of this application, the moving target may be a hand of a user, and a change of a gesture of the user in consecutive image frames are detected based on a background subtraction operation, to determine a category of the gesture.

Compared with a conventional contact human-computer interaction manner, the user can perform an operation in a barehanded manner by holding in air, which is a non-contact human-computer interaction manner without bringing any inconvenience to gesture interaction of the user. An air gesture includes pointing, waving a hand, making a fist, turning a palm, or the like. The user can naturally express an interaction intention in air by using a finger action, a wrist action, or an arm action, which has characteristics such as broad interaction space, high flexibility, and good interaction experience.

In the related art, in some scenarios, after starting a camera application, a user may control a camera to take a photo or record a video through an air gesture operation such as unfolding a palm. However, with increasing requirements of the user, there are increasing scenarios in which air gestures are used. In a possible scenario, the user wears a glove or has unclean fingers so that the user does not intend to touch a screen of a mobile phone, but there is still a need to control the mobile phone. For example, the user needs to watch a short video when eating crayfishes. In another possible scenario, when driving a vehicle, the user is slightly far away from the screen of the mobile phone and has a need to invoke another application. For example, the user drives near an office place and has a need to punch in. To achieve requirements of the user to perform air operations in different scenarios, a device needs to continuously perform gesture recognition, which imposes high requirements for a camera device and a processor of the device.

Therefore, there is an urgent need for a gesture sensing solution, to reduce power consumption of the device while satisfying more requirements of the user. Embodiments of this application provide a gesture sensing method, a device, and a storage medium. According to an electronic device provided in embodiments of this application, images with different frame rates and/or resolution can be obtained by adjusting an operating mode of a camera, to detect whether a gesture exists in the images step by step, recognize whether the gesture is a target gesture, and the like. Images acquired by the camera in different operating modes have different frame rates and/or resolution. In the foregoing solution, a plurality of operating modes are set for the camera, so that the operating modes of the camera are automatically switched at different detection stages, to satisfy requirements for image quality at different detection stages, thereby reducing power consumption of the device. In addition, a processing module of the device may be further improved, so that different processing modules perform different image detection tasks, such as detecting whether a gesture exists in an image, and recognizing the gesture, thereby further reducing the power consumption of the device.

The following describes the technical solutions of this application and how to resolve the foregoing technical problems according to the technical solutions of this application in detail by using specific embodiments. The following specific embodiments may be independently implemented, and may also be combined with each other, and the same or similar concepts or processes may not be described repeatedly in some embodiments.

It should be noted that, description is made by using an example in which the electronic device is a mobile phone, and the example does not constitute a limitation to embodiments of this application.

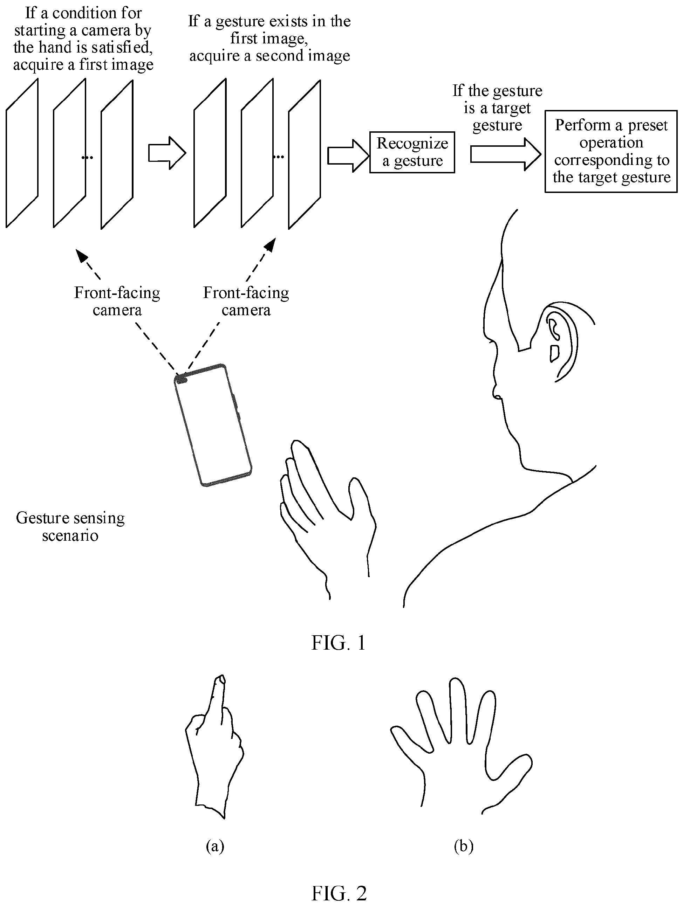

FIG. 1 is a schematic diagram of a gesture sensing method according to an embodiment of this application. As shown in FIG. 1, if a condition for starting a camera is satisfied, for example, a user has enabled a gesture sensing function, the camera of the mobile phone is triggered to operate in a first mode, and the camera continuously acquires a first image with first resolution at a first frame rate in the first mode. In addition, the mobile phone may automatically recognize whether a gesture exists in the first image (that is, whether a hand exists in the first image). If it is recognized that the gesture exists in the first image, the mobile phone triggers the camera to operate in a second mode, and the camera continuously acquires a second image with second resolution at a second frame rate in the second mode, and recognizes a gesture in the second image, to determine whether the gesture is a target gesture. If it is recognized that the gesture is the target gesture, the mobile phone may run a preset operation corresponding to the target gesture, for example, swipe up or swipe down an interface, adjust screen brightness, volume, or vibration intensity, and invoke an application. The first frame rate of the first image is less than the second frame rate of the second image, and the first resolution of the first image is less than the second resolution of the second image.

In embodiments of this application, unless otherwise specified, the camera refers to a front-facing camera of the mobile phone.

In the gesture sensing method shown in this embodiment, the camera can continuously acquire an image with low power consumption to detect whether a hand exists in a range of the camera. If the hand is detected, the camera switches a shooting mode to acquire an image with high resolution and/or a high frame rate to recognize a gesture. If the gesture is a target gesture, a preset operation corresponding to the gesture is run, thereby implementing a gesture sensing function of the device, and satisfying an air operation requirement of the user. The operating mode of the camera is adjusted to reduce the power consumption of the device.

In this embodiment of this application, the target gesture includes at least one gesture action. Correspondingly, that the mobile phone recognizes the target gesture includes recognizing at least one gesture action. For example, FIG. 2 to FIG. 4 are schematic diagrams of a target gesture according to an embodiment of this application. The target gesture and an application scenario thereof are described in detail below with reference to accompanying drawings.

**In** a possible implementation, the target gesture is a first gesture, that is, there is one target gesture.

For example, a gesture action shown in (a) of FIG. 2 is extending a forefinger. For example, if a current interface of the mobile phone is a short video interface, after recognizing the gesture, the mobile phone likes or favorites the short video. For another example, if the current interface of the mobile phone is a selfie interface, after recognizing the gesture, the mobile phone starts a countdown for 3 seconds to perform shooting.

For example, a gesture shown in (b) of FIG. 2 is opening five fingers. For example, if a current screen status of the mobile phone is an on state and the interface is any interface, after recognizing the gesture, the mobile phone shoots the current interface. For another example, if the current interface of the mobile phone is the selfie interface, after recognizing that the user performs the action of opening the five fingers, the mobile phone may control the front-facing camera of the mobile phone to shoot an image, or start/pause video recording. For another example, if the current screen status of the mobile phone is screen-off, after recognizing the gesture, the mobile phone turns on a screen to view time/a message, or start an office application and perform a punch-in task. For another example, if the current interface is a navigation interface, after recognizing the gesture, the mobile phone may automatically broadcast a real-time road condition.

In a possible implementation, the target gesture includes a first gesture and a second gesture, the first gesture is a start gesture of a gesture change, and the second gesture is an end gesture of the gesture change.

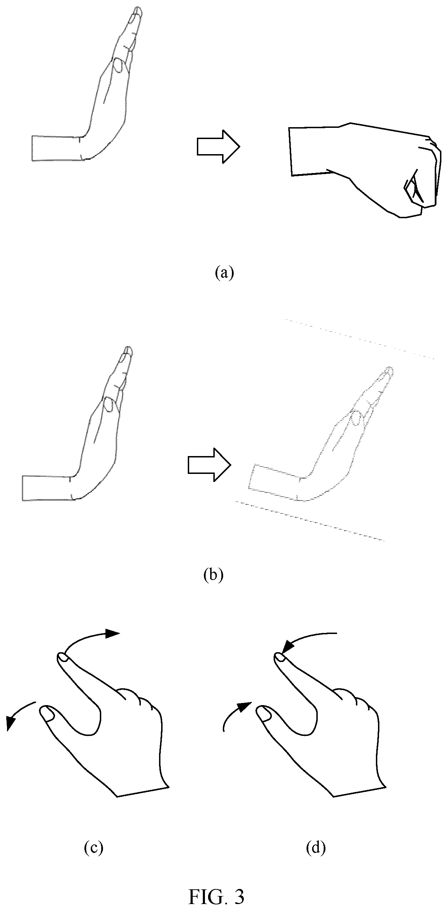

For example, a gesture action shown in (a) of FIG. 3 is a grasping action, and a gesture changes from opening five fingers to grasping of the five fingers to make a fist. In other words, a start gesture is that a palm faces the front-facing camera of the mobile phone, and an end gesture is making the fist. For example, if a current screen status of the mobile phone is an on state and an interface is any interface, after recognizing the gesture, the mobile phone shoots the current interface.

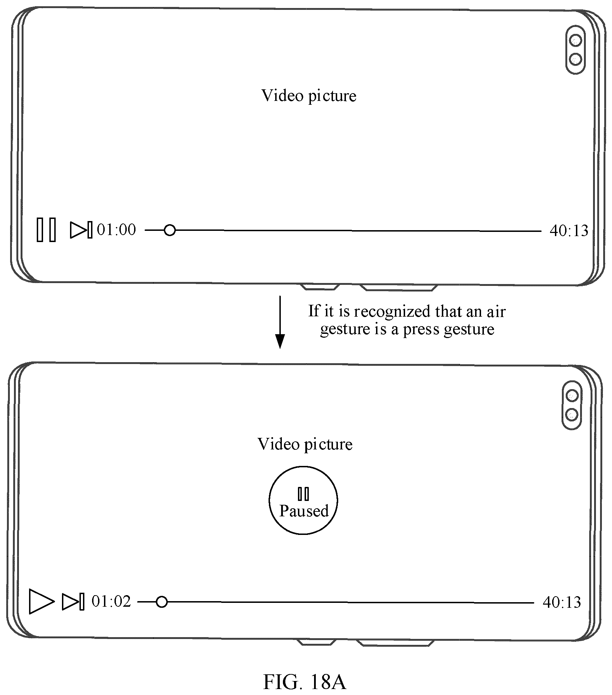

For example, a gesture action shown in (b) of FIG. 3 is a press action, a gesture is making an action approaching the mobile phone, both a start gesture and an end gesture are that the palm faces the front-facing camera of the mobile phone, the end gesture is closer to a screen, and a preset operation corresponding to the gesture action may be pausing or continuing playback. For example, if the current interface of the mobile phone is a video/music playback interface and is currently in a playing state, after recognizing the gesture, the mobile phone pauses playing a video/music. As shown in FIG. 18A, the user may pause a current video picture by using an air press gesture in a range of the front-facing camera of the mobile phone. If the current interface of the mobile phone is the video/music playback interface and is currently in a paused state, after recognizing the gesture, the mobile phone continues to play a video/music.

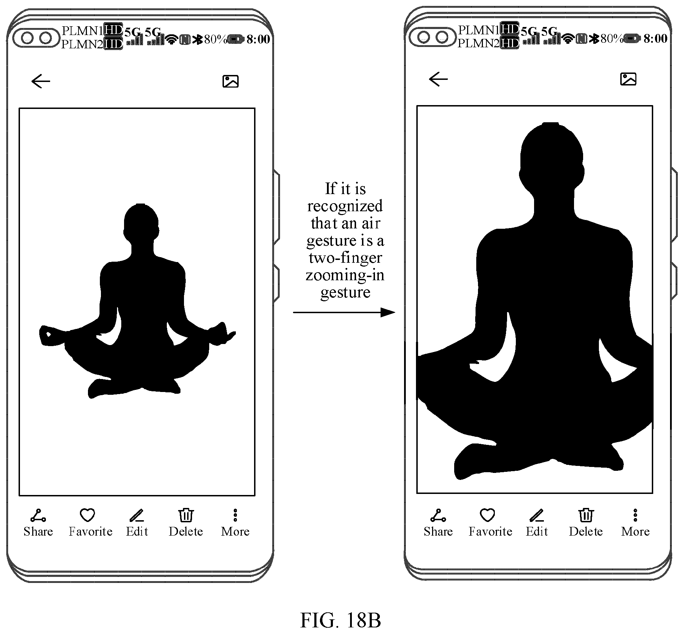

For example, a gesture action shown in (c) of FIG. 3 is zooming in with two fingers (a thumb and a forefinger). In other words, a distance between the thumb and the forefinger in a start gesture is less than a distance between the thumb and the forefinger in an end gesture. For example, if a picture is currently displayed on the interface of the mobile phone, the mobile phone zooms in the picture after recognizing the gesture action of zooming in with the two fingers. As shown in FIG. 18B, the user may zoom in the picture on the display interface by using an air two-finger zooming-in gesture in the range of the front-facing camera of the mobile phone.

For example, a gesture action shown in (d) of FIG. 3 is zooming out with two fingers (a thumb and a forefinger). In other words, a distance between the thumb and the forefinger in a start gesture is greater than a distance between the thumb and the forefinger in an end gesture. For example, if a picture is currently displayed on the interface of the mobile phone, the mobile phone zooms out the picture after recognizing the gesture action of zooming out with the two fingers.

In a possible implementation, the target gesture includes a first gesture, a second gesture, and a third gesture, the first gesture is a start gesture of a gesture change, the second gesture is an intermediate gesture of the gesture change, and the third gesture is an end gesture of the gesture change.

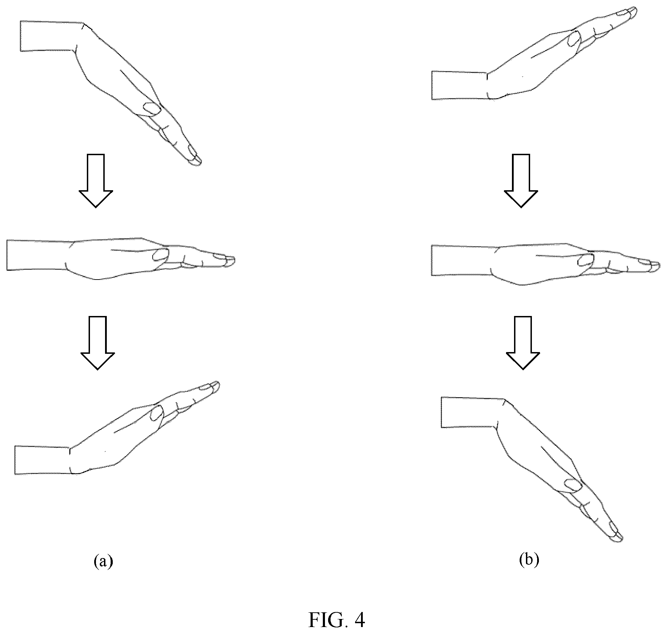

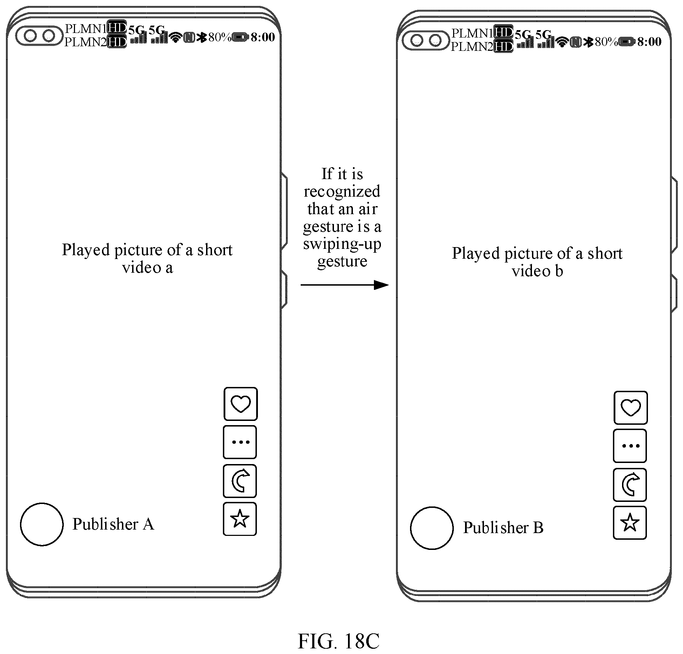

For example, a gesture action shown in (a) of FIG. 4 is a swiping-up action. A start gesture of the gesture action is that the back of the hand faces the front-facing camera of the mobile phone, an intermediate gesture is that the palm is flattened, and an end gesture is that the palm faces the front-facing camera of the mobile phone. In other words, the gesture changes from bending downward to flattening the palm, and then to flipping the palm to face the camera. For example, if the mobile phone currently displays a data flow interface, after recognizing the gesture, the mobile phone scrolls downward by a fixed length. For another example, if the mobile phone currently displays a page, after recognizing the gesture, the mobile phone turns to a next page. For another example, if the mobile phone currently plays a video, after recognizing the gesture, the mobile phone turns volume or brightness up. For another example, if the current interface of the mobile phone is a short video interface, after recognizing the gesture, the mobile phone plays a next short video. As shown in FIG. 18C, the user may control to play the next short video by using an air swiping-up gesture in the range of the front-facing camera range of the mobile phone.

For example, a gesture action shown in (b) of FIG. 4 is a swiping-down action. A start gesture of the gesture action is that the palm faces the front-facing camera of the mobile phone, an intermediate gesture is that the palm is flattened, and an end gesture is that the back of the hand faces the front-facing camera of the mobile phone. In other words, the gesture changes from the palm facing the front-facing camera of the mobile phone to the palm being pulled down to be perpendicular to the screen of the mobile phone, and then to the palm bending to cause the back of the hand to face the front-facing camera. For example, if the mobile phone currently displays a data flow interface, after recognizing the gesture, the mobile phone scrolls upward by a fixed length. For another example, if the mobile phone currently displays a page, after recognizing the gesture, the mobile phone turns to a previous page. For another example, if the mobile phone currently plays a video, after recognizing the gesture, the mobile phone turns volume or brightness down. For another example, if the current interface of the mobile phone is a short video interface, after recognizing the gesture, the mobile phone plays a previous short video.

Based on the foregoing embodiments, it can be learned that, in different application scenarios, the user may implement diverse control of the mobile phone by using preset air gestures. The application scenarios include that, for example, the screen of the mobile phone is in an off state, the user watches a video or a short video, the user browses a web page or an album, the user uses driving navigation, and the user shoots an image or records a video.

It should be noted that, the application scenarios of the gesture sensing method are not limited in embodiments of this application. In addition to the application scenarios described in the foregoing embodiments, the gesture sensing method may alternatively be applied to any other scenario in which the mobile phone may be controlled through an air gesture operation.

In the foregoing embodiments, the condition for starting the camera includes that the gesture sensing function has been enabled. In some embodiments, in response to a first operation of enabling the gesture sensing function, the camera of the mobile phone runs in the first mode (runs in the background, for example, the mobile phone currently starts a third-party application, and the camera runs in the background), to acquire the first image.

The first operation may be a tap operation performed by the user on a system setting interface, or the first operation may be a voice operation. This is not limited in embodiments of this application.

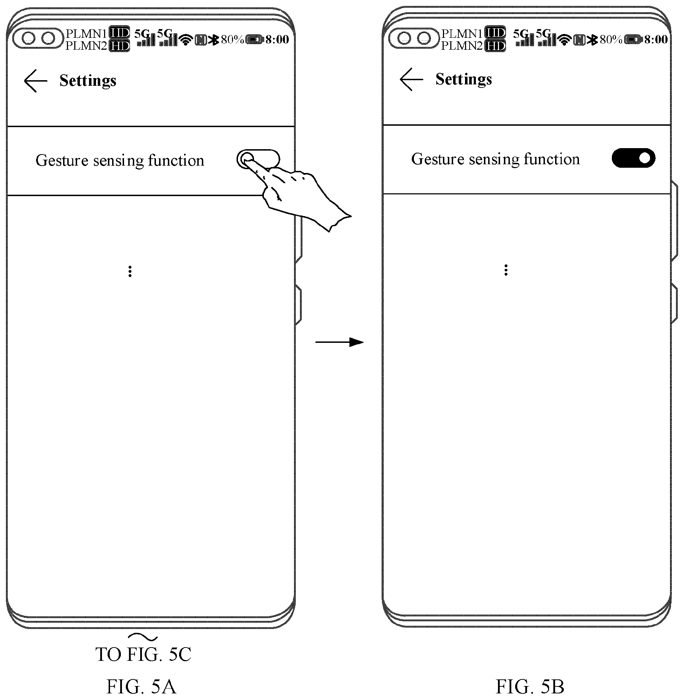

For example, FIG. 5A to FIG. 5F are schematic diagrams of an interface according to an embodiment of this application. As shown in FIG. 5A and FIG. 5B, the user can select to enable or disable the gesture sensing function in the setting interface of the system application. If the user selects to enable the gesture sensing function, the camera of the mobile phone operates in a low-power consumption shooting mode, and continuously acquires a low-resolution image, to detect whether a hand exists in the image.

In some embodiments, the user may further select to sense one or more gestures on the setting interface, and an operation corresponding to each gesture is preset. For example, a gesture Ais for swiping down an interface/turning to a next page, a gesture B is for swiping up an interface/turning to a previous page, a gesture C is for taking a screenshot, and a gesture D is for pausing/continuing playback.

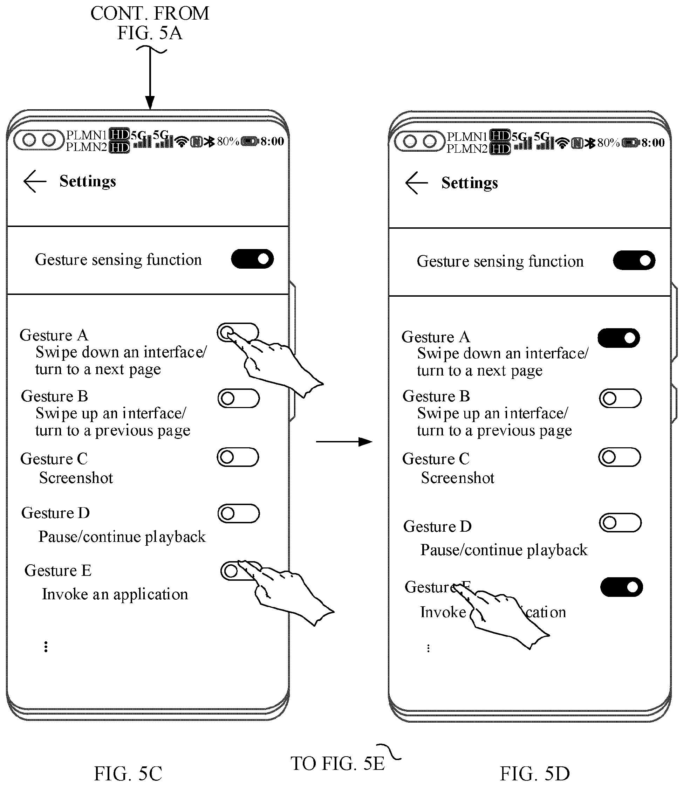

For example, as shown in FIG. 5C and FIG. 5D, the user may select to enable sensing of the gesture A. If the mobile phone recognizes the gesture A, the operation corresponding to the gesture A is performed: swiping down an interface/turning to a next page. The user may alternatively select to enable sensing of a gesture E. If the mobile phone recognizes the gesture E, an operation corresponding to the gesture E is performed: invoking a preset application.

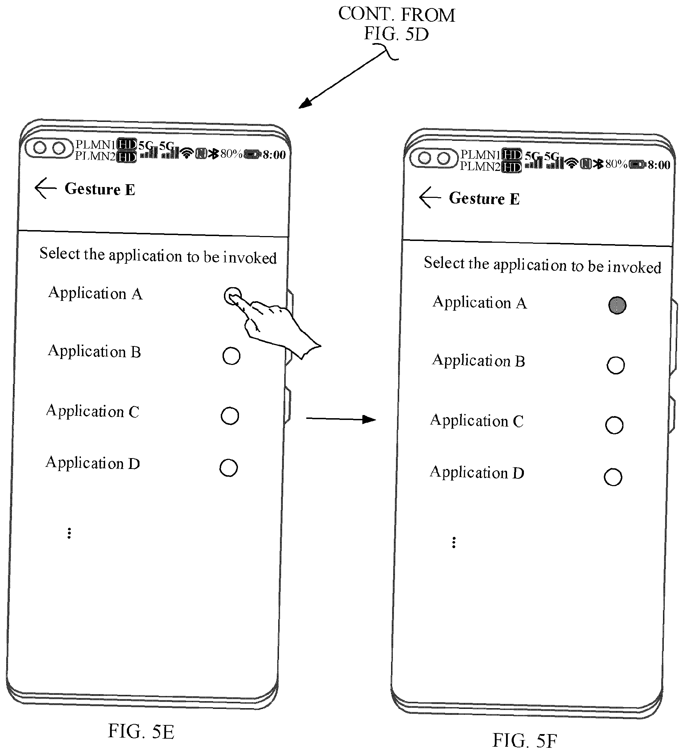

In some embodiments, the user may customize an application corresponding to the gesture E. As shown in FIG. 5D, FIG. 5E, and FIG. 5F, the user selects the gesture E to be for invoking an application A on a setting interface of the gesture E. For example, the gesture E is opening five fingers, and the application A is a punch-in applet of an office application. When the user drives and reaches near an office place, the punch-in applet of the office application may be quickly started by using the air gesture E, to complete punch-in, thereby implementing gesture sensing, and improving user experience of the user.

In some embodiments, the condition for starting the camera further includes a first condition, where the first condition includes at least one of the following: a screen status of the mobile phone is an on state; the mobile phone has been unlocked; a time difference between an optical signal emitted by an optical proximity sensor of the mobile phone and a reflected signal of the optical signal is greater than a first threshold, and/or signal strength of the reflected signal is less than a second threshold, and/or the receive light sensor has not received the reflected signal; detected data of an ambient light sensor of the mobile phone is greater than a third threshold; a screen of the mobile phone faces a preset direction; or the mobile phone runs a preset application.

In this embodiment, if the mobile phone has enabled the gesture sensing function and the first condition is satisfied, the camera of the mobile phone is triggered to continuously acquire the first image. The first condition is added, to prevent the camera of the mobile phone from continuously acquiring the first image when unnecessary, thereby further reducing the power consumption of the device.

Based on the foregoing embodiments, the following describes in detail various possible implementations of triggering the camera to acquire the first image.

In a possible implementation, if the mobile phone has enabled the gesture sensing function, the camera of the mobile phone is triggered to continuously acquire the first image.

In a possible implementation, if the mobile phone has enabled the gesture sensing function, the screen status of the mobile phone is detected, and if the screen status of the mobile phone is the on state, the camera of the mobile phone is triggered to continuously acquire the first image. Interfaces displayed by the mobile phone in the on state include, for example, a screen-locked interface, a main interface, and a third-party application interface.

In a possible implementation, if the mobile phone has enabled the gesture sensing function, it is detected whether the mobile phone has been unlocked, and if the mobile phone has been unlocked, the camera of the mobile phone is triggered to continuously acquire the first image.

In a possible implementation, if the mobile phone has enabled the gesture sensing function, it is detected whether the optical signal emitted by the optical proximity sensor of the mobile phone is blocked, and if it is determined that the optical signal emitted by the optical proximity sensor is not blocked, the camera of the mobile phone is triggered to continuously acquire the first image.

In an example, if the time difference between the optical signal emitted by the optical proximity sensor of the mobile phone and the reflected signal of the optical signal is greater than the first threshold, and/or the signal strength of the reflected signal is less than the second threshold, and/or the optical proximity sensor has not received the reflected signal, it may be determined that the optical signal emitted by the optical proximity sensor is not blocked.

It may be understood that, if the user makes or answers a call through a receiver, or if the screen of the mobile phone is turned upside-down, or if the mobile phone is located in a handbag or a pocket, the optical signal emitted by the optical proximity sensor of the mobile phone is blocked, and a gesture cannot be detected in an image acquired by the front-facing camera. In this case, the camera can stop continuously acquiring an image, thereby reducing the power consumption of the device.

In a possible implementation, if the mobile phone has enabled the gesture sensing function, it is detected whether the detected data of the ambient light sensor of the mobile phone is greater than the third threshold, and if it is determined that the detected data of the ambient light sensor is greater than the third threshold, the camera of the mobile phone is triggered to acquire the first image. The detected data mainly refers to brightness of ambient light. It should be understood that, if the detected data of the ambient light sensor of the mobile phone is greater than the third threshold, it indicates that the electronic device is not in a dark environment, for example, the mobile phone is in a pocket, or it is currently in a nighttime period.

In a possible implementation, if the mobile phone has enabled the gesture sensing function, a screen orientation of the mobile phone is detected, and if the screen of the mobile phone faces the preset direction, the camera of the mobile phone is triggered to continuously acquire the first image. In this implementation, the preset direction includes a direction in which the user holds the mobile phone to browse interface content, a direction in which the user places the mobile phone on a desk to browse interface content, or the like. The direction may be determined by detecting attitude data of the mobile phone, where the attitude data includes a pitch angle, a yaw angle, and a roll angle.

In a possible implementation, if the mobile phone has enabled the gesture sensing function, it is detected whether the mobile phone runs the preset application, and if it is determined that the mobile phone runs the preset application, the camera of the mobile phone is triggered to continuously acquire the first image. For example, the preset application is a short video application. If the mobile phone detects that the user is watching a short video, the camera of the mobile phone is triggered to continuously acquire the first image, to detect whether the user uses a preset air gesture, thereby satisfying a requirement of the user to browse the short video in air. For another example, the preset application is a navigation application. If the mobile phone detects that the user is using driving navigation of the navigation application, the camera of the mobile phone is triggered to continuously acquire the first image, to detect whether the user uses a preset air gesture, thereby satisfying a requirement of the user to listen to a road condition broadcast in air. The preset application is not limited in embodiments of this application. In addition, it should be noted that, that the mobile phone runs the preset application includes that an interface of the preset application is currently displayed on the screen of the mobile phone, or the preset application is run in the background.

In a possible implementation, if the mobile phone has enabled the gesture sensing function, and it is determined that at least two of the following are satisfied: the screen status of the mobile phone is the on state, the mobile phone has been unlocked, the optical signal emitted by the optical proximity sensor of the mobile phone is not blocked, or the mobile phone runs the preset application, the camera of the mobile phone is triggered to continuously acquire the first image.

The foregoing embodiment shows a gesture sensing method. If the condition for starting the camera is satisfied, the camera of the mobile phone is triggered to perform resident scanning in the first mode, to continuously acquire the first image with relatively low resolution. The condition for starting the camera at least includes that the gesture sensing function has been enabled. If it is detected that the gesture exists in the first image, the camera is triggered to acquire the second image with relatively high resolution in the second mode, and if it is recognized that the gesture in the second image is the target gesture, the preset operation corresponding to the target gesture is performed. In the foregoing method, two operating modes are set for the camera, so that the modes of the camera are automatically switched at different detection stages, to satisfy requirements for image quality at different detection stages, thereby reducing the power consumption of the device.

In another embodiment, if the mobile phone has enabled the gesture sensing function and it is detected that the mobile phone is in a moving state, the camera of the mobile phone may be triggered to acquire the first image. Conversely, if the mobile phone has enabled the gesture sensing function and it is detected that the mobile phone is in a stationary state, the camera may be controlled to be closed, thereby reducing the power consumption of the device. That the mobile phone is in the moving state includes the following scenarios, for example, the user uses the mobile phone to navigate when driving a vehicle, and the user uses the mobile phone to navigate when riding.

In another embodiment, if the mobile phone has enabled the gesture sensing function and it is detected that the mobile phone is in a stationary state, the camera of the gesture may be triggered to acquire the first image, to sense a possible air control requirement of the user at any time. That the mobile phone is in the stationary state includes, for example, that the mobile phone is placed on a desk.

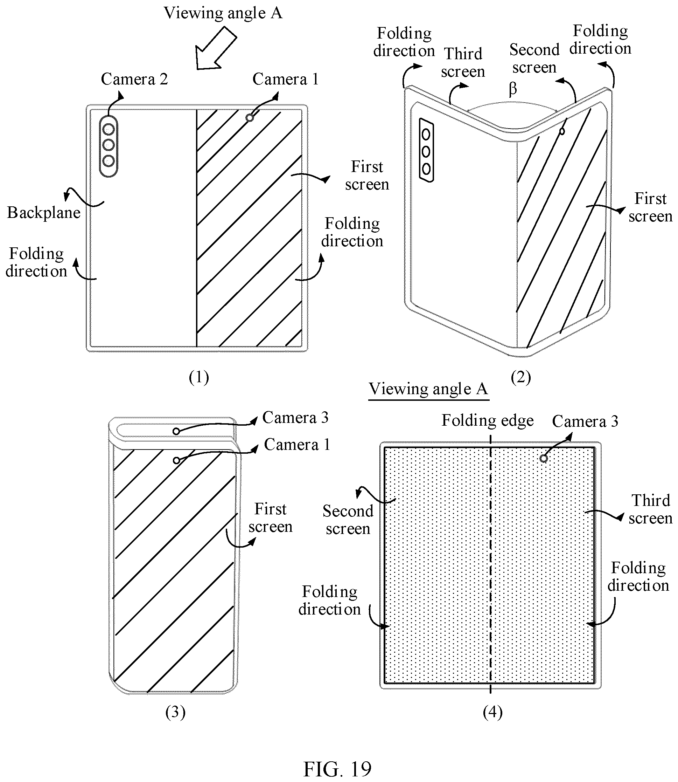

In some embodiments, if the mobile phone is a mobile phone with a foldable screen, the mobile phone with the foldable screen includes an inner screen and an outer screen, a first camera is correspondingly arranged on the inner screen, and a second camera is correspondingly arranged on the outer screen. For example, the first camera is a camera 3 in FIG. 19, and the second camera is a camera 1 in FIG. 19.

In an example, if it is detected that the outer screen of the mobile phone is in an on state and the mobile phone is in a folded state, the second camera is controlled to run in the first mode. In an example, if it is detected that the outer screen of the mobile phone is in an on state and the mobile phone is in an unfolded state, the second camera is controlled to run in the first mode. Based on the two examples, in some embodiments, before the second camera is controlled to run in the first mode, the method further includes: detecting that a status of the mobile phone satisfies at least one of the following: the mobile phone has been unlocked; a time difference between an optical signal emitted by an optical proximity sensor (on the outer screen) of the mobile phone and a reflected signal of the optical signal is greater than a first threshold, and/or signal strength of the reflected signal is less than a second threshold, and/or the receive light sensor has not received the reflected signal; detected data of an ambient light sensor of the mobile phone is greater than a third threshold; the outer screen of the mobile phone faces a preset direction; or the mobile phone runs a preset application.

In an example, if it is detected that the inner screen of the mobile phone is in an on state and the mobile phone is in an unfolded state, the first camera is controlled to run in the first mode. Before the first camera is controlled to run in the first mode, the method further includes: detecting that a status of the mobile phone satisfies at least one of the following: the mobile phone has been unlocked; a time difference between an optical signal emitted by an optical proximity sensor (on the inner screen) of the mobile phone and a reflected signal of the optical signal is greater than a first threshold, and/or signal strength of the reflected signal is less than a second threshold, and/or the receive light sensor has not received the reflected signal; detected data of an ambient light sensor of the mobile phone is greater than a third threshold; the inner screen of the mobile phone faces a preset direction; or the mobile phone runs a preset application.

Based on the foregoing examples, before the first camera is controlled to run in the first mode or the second camera is controlled to run in the first mode, the method further includes: detecting that a status of the electronic device satisfies a second condition, where the second condition includes at least one of the following: the electronic device has been unlocked; a time difference between an optical signal emitted by an optical proximity sensor of the electronic device and a reflected signal of the optical signal is greater than a first threshold, and/or signal strength of the reflected signal is less than a second threshold, and/or the receive light sensor has not received the reflected signal; detected data of an ambient light sensor of the electronic device is greater than a third threshold; the inner screen or the outer screen of the electronic device faces a preset direction; or the electronic device runs a preset application.

In an example, when the second camera runs in the first mode, if it is detected that the electronic device is from the folded state to the unfolded state, the electronic device controls the first camera to run in the first mode, and closes the second camera.

In an example, when the first camera runs in the first mode, if it is detected that the electronic device is from the unfolded state to the folded state, the electronic device controls the first camera to be closed, and controls the second camera to run in the first mode; or the electronic device controls the first camera to be closed.

That the mobile phone with the foldable screen performs the gesture sensing method is described in detail below with reference to FIG. 19.

For example, FIG. 19 is a schematic diagram of a structure of a mobile phone with a foldable screen according to an embodiment of this application. As shown in FIG. 19, the screen of the mobile phone with the foldable screen includes a first screen, a second screen, and a third screen, the first screen is an outer screen of the mobile phone with the foldable screen, the second screen and the third screen are inner screens of the mobile phone with the foldable screen, the foldable screen includes the second screen and the third screen, and the foldable screen is folded based on a folding edge shown in (4) of FIG. 19 to form the second screen and the third screen. A virtual axis in which the foldable screen is located is a common axis. The inner screen is a screen located inside when the foldable screen is in the folded state, and the outer screen is a screen located outside when the foldable screen is in a closed state. An included angle β between the second screen and the third screen is a hinge angle of the mobile phone with the foldable screen, and a physical status of the foldable screen may be determined by determining the hinge angle. The physical status includes the folded state shown in (3) of FIG. 19, the unfolded state shown in (4) of FIG. 19, or a bracket state shown in (2) of FIG. 19. The mobile phone with the foldable screen shown in FIG. 19 includes three cameras, respectively denoted as a camera 1, a camera 2, and a camera 3. As shown in (1) of FIG. 19, the camera 1 is arranged at a middle position of an upper part of the first screen, and the camera 2 is arranged on a backplane. As shown in (4) of FIG. 19, the camera 3 is arranged at a middle position of an upper part of the third screen. When the mobile phone with the foldable screen is in the folded state, the camera 1 may be considered as a front-facing camera, and the camera 2 may be considered as a rear-facing camera, as shown in (3) of FIG. 19. When the mobile phone with the foldable screen is in the unfolded state, the camera 3 may be considered as a front-facing camera, and the cameras 1 and 2 may be considered as rear-facing cameras.

The mobile phone with the foldable screen shown in FIG. 19 is used as an example below to describe examples in which the mobile phone with the foldable screen starts a camera under which case and starts which cameras.

In a possible implementation, if the mobile phone with the foldable screen has enabled the gesture sensing function, when it is detected that the mobile phone is in the folded state and the outer screen (for example, the first screen in FIG. 19) is in the on state, the camera 1 of the mobile phone with the foldable screen is triggered to continuously acquire the first image, to detect whether a gesture exists in a range of the camera.

In a possible implementation, if the mobile phone with the foldable screen has enabled the gesture sensing function, when it is detected that the mobile phone is in the folded state, the outer screen is in the on state, and at least one of the second condition is satisfied, the camera 1 of the mobile phone with the foldable screen is triggered to continuously acquire the first image, to detect whether a gesture exists in a range of the camera.

In a possible implementation, if the mobile phone with the foldable screen has enabled the gesture sensing function, when it is detected that the mobile phone is in the unfolded state and the inner screens (for example, the second screen and the third screen in FIG. 19) are in the on state, the camera 3 of the mobile phone with the foldable screen is triggered to continuously acquire the first image, to detect whether a gesture exists in a range of the camera.

In a possible implementation, if the mobile phone with the foldable screen has enabled the gesture sensing function, when it is detected that the mobile phone is in the unfolded state, the inner screens are in the on state, and at least one of the second conditions is satisfied, the camera 3 of the mobile phone with the foldable screen is triggered to continuously acquire the first image, to detect whether a gesture exists in a range of the camera.

In a possible implementation, it is assumed that the mobile phone with the foldable screen satisfies the condition for starting the camera, and the mobile phone is currently in the folded state and has started the camera 1. When it is detected that the mobile phone is from the folded state to the unfolded state and other conditions for starting the camera remain unchanged, the camera 1 may be closed, and the camera 3 may be started, to detect whether a gesture exists in a range of the camera 3.

In a possible implementation, it is assumed that the mobile phone with the foldable screen satisfies the condition for starting the camera, and the mobile phone is currently in the unfolded state and has started the camera 3. When it is detected that the mobile phone is switched from the unfolded state to the folded state and other conditions for starting the camera remain unchanged, the camera 3 may be closed, and the camera 1 may be started, to detect whether a gesture exists in a range of the camera 1.

It should be noted that, for that a mobile phone with a foldable screen in another form performs the gesture sensing method, refer to the mobile phone with the foldable screen shown in FIG. 19. An implementation principle and a technical effect thereof are similar. A structural style of the mobile phone with the foldable screen is not limited in embodiments of this application.

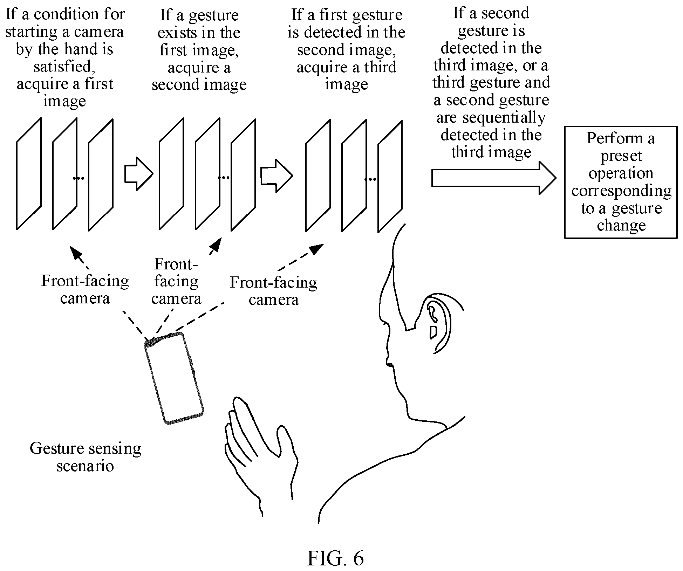

FIG. 6 is a schematic diagram of a gesture sensing method according to an embodiment of this application. As shown in FIG. 6, in a possible implementation, the target gesture includes a first gesture and a second gesture. If the condition for starting the camera is satisfied, the camera of the mobile phone is triggered to operate in the first mode, and the camera continuously acquires the first image with the first resolution at the first frame rate in the first mode. If the mobile phone recognizes that a gesture exists in the first image, the camera is triggered to operate in the second mode (switch from the first mode to the second mode), and the camera continuously acquires the second image with the second resolution at the second frame rate in the second mode. If it is recognized that a gesture in the second image is the first gesture (that is, a start gesture of the target gesture), the camera is triggered to operate in a third mode (switch from the second mode to the third mode), and the camera continuously acquires a third image with third resolution at a third frame rate in the third mode. If it is recognized that a gesture in the third image is the second gesture (that is, an end gesture of the target gesture), the mobile phone runs the preset operation corresponding to the target gesture. In another possible implementation, the target gesture includes a first gesture, a second gesture, and a third gesture. Different from the foregoing implementation, if it is recognized that gestures in the third image are sequentially the second gesture and the third gesture (that is, an intermediate gesture of the target gesture), the mobile phone runs the preset operation corresponding to the target gesture.

In this embodiment, the first frame rate of the first image is less than the second frame rate of the second image, and the second frame rate of the second image is less than the third frame rate of the third image. For example, the first frame rate may be set to 2 fps, the second frame rate may be set to 5 fps, and the third frame rate may be selected within an interval [10 fps, 30 fps], for example, the third frame rate is 10 fps.

In this embodiment, the first resolution of the first image is less than the second resolution of the second image, and the second resolution of the second image is less than or equal to the third resolution of the third image. For example, the first resolution may be set to 120×180 or 640×480. The second resolution and the third resolution may be set to be the same, for example, 1920× 1080.

In the gesture sensing method shown in this embodiment, the camera may perform switching based on the three modes. The first image is acquired in the first mode, to detect whether a gesture exists in the range of the camera. The second image is acquired in the second mode, to detect whether a gesture is the start gesture of the target gesture. The third image is acquired in the third mode, to detect a gesture change, that is, to detect whether the gesture change includes the intermediate gesture and the end gesture of the target gesture. The operating mode of the camera is adjusted step by step, so that the resolution and/or frame rate of the acquired image is increased, thereby improving accuracy of gesture recognition while reducing the power consumption of the device as much as possible.

The foregoing embodiments all involve switching of the operating mode of the camera. The switching of the camera operating mode is closely related to a frame rate of an image. The following describes a solution of how to adjust a frame rate of an image acquired by the camera.

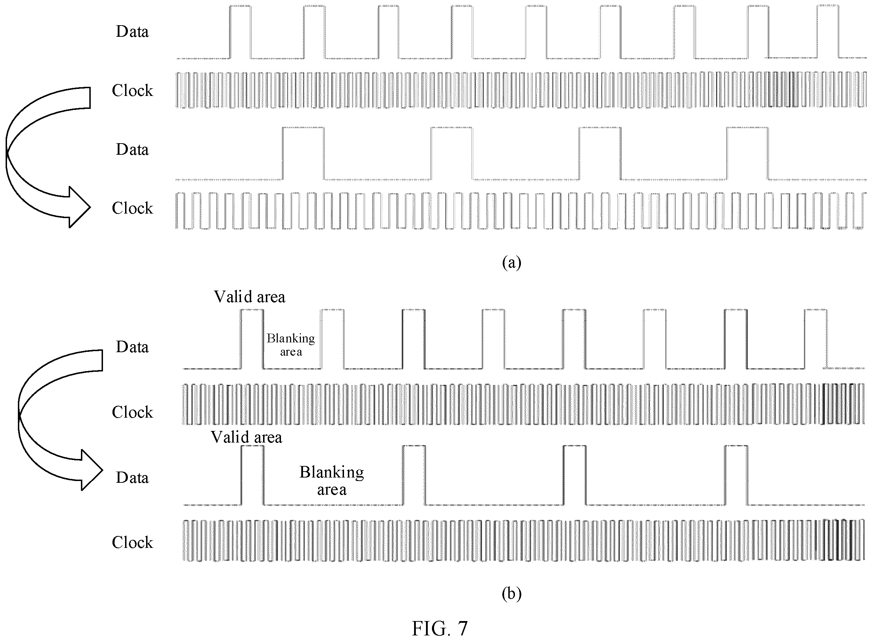

For example, FIG. 7 is a schematic diagram of dynamic frame adjustment according to an embodiment of this application. As shown in (a) of FIG. 7, in a possible frame adjustment solution, a frame rate of an image acquired/transmitted by the camera is adjusted by adjusting a frequency of a clock. Specifically, data transmission is performed based on a change of the clock, and data is usually acquired/transmitted at a rising edge or a falling edge of the clock. If the frame rate of the image acquired/transmitted by the camera needs to be doubled, the frequency of the clock may be doubled, and a corresponding data transmission speed may also be doubled. If the frame rate of the image acquired/transmitted by the camera needs to be halved, the frequency of the clock may be halved, and the corresponding data transmission speed may also be halved. As shown in (b) of FIG. 7, in a possible frame adjustment solution, a frame rate of an image acquired/transmitted by the camera is adjusted by adjusting a ratio of a valid area/a blanking area of data. Specifically, the frame rate may be adjusted by adjusting a configuration for a length of the blanking area. Increasing the length of the blanking area may reduce the frame rate. Conversely, reducing the length of the blanking area may increase the frame rate.

It should be noted that, in the first frame adjustment solution, modification of the frequency of the clock requires to close the clock and repower on the clock, and dynamic inter-frame adjustment cannot be implemented. Therefore, the second frame adjustment solution is used in this embodiment of this application, to implement dynamic frame adjustment.

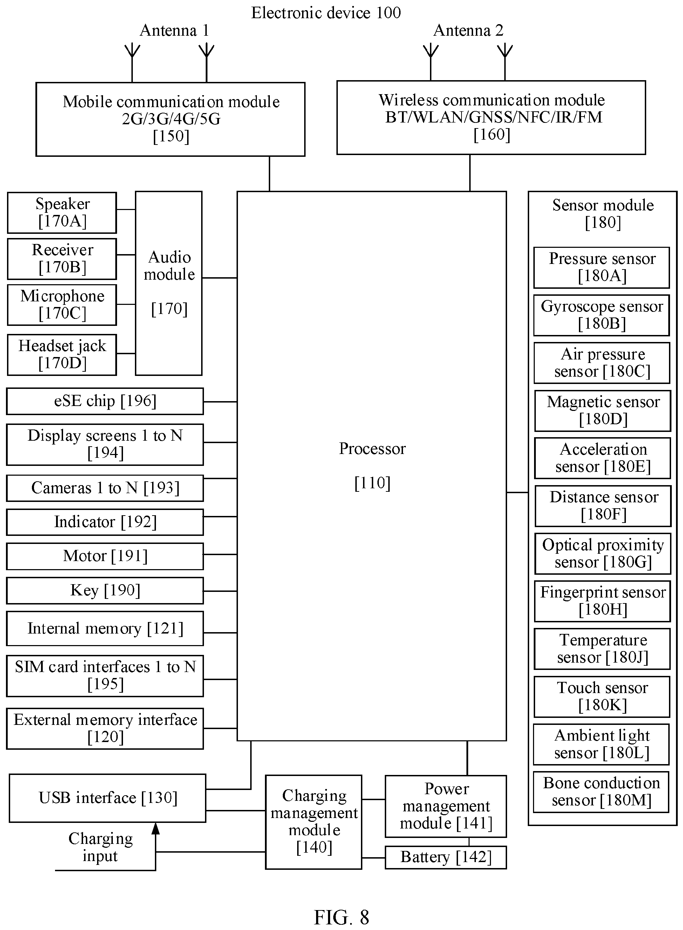

To make embodiments of this application more comprehensible, the following describes a structure of the electronic device in embodiments of this application. For example, FIG. 8 is a schematic diagram of a structure of an electronic device according to an embodiment of this application. As shown in FIG. 8, an electronic device 100 may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a key 190, a motor 191, an indicator 192, a camera 193, a display screen 194, a subscriber identity module (subscriber identification module, SIM) card interface 195, and the like. It may be understood that, the schematic structure in this embodiment constitutes no specific limitation on the electronic device 100. In some other embodiments of this application, the electronic device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display process unit (display process unit, DPU), and/or a neural-network processing unit (neural-network processing unit, NPU). Different processing units may be independent devices, or may be integrated into one or more processors. In some embodiments, the electronic device 100 may also include one or more processors 110.

In some embodiments, the processor 110 may include one or more interfaces.

It may be understood that an interface connection relationship between the modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The power management module 141 is configured to connect to the battery 142, the charging management module 140, and the processor 110. The power management module 141 receives an input of the battery 142 and/or the charging management module 140, to supply power to the processor 110, the internal memory 121, the display screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like. The mobile communication module 150 may provide a wireless communication solution that includes 2G/3G/4G/5G or the like and that is applied to the electronic device 100. The wireless communication module 160 may provide a solution for wireless communication including a wireless local area network (wireless local area network, WLAN), Bluetooth, a global navigation satellite system (global navigation satellite system, GNSS), frequency modulation (frequency modulation, FM), an NFC technology, an infrared (infrared, IR) technology, and the like to be applied to the electronic device 100.

The electronic device 100 may implement a display function by using the GPU, the display screen 194, the application processor, and the like. The GPU is a microprocessor for image processing, and is connected to the display screen 194 and the application processor. The GPU is configured to perform mathematical and geometric calculation, and is configured to render an image. The processor 110 may include one or more GPUs that execute instructions to generate or change display information.

The display screen 194 is configured to display an image, a video, and the like. The display screen 194 includes a display panel. The display panel may use a liquid crystal touchscreen (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), and the like. In some embodiments, the electronic device 100 may include one or N display screens 194, where N is a positive integer greater than 1.

The electronic device 100 may implement a shooting function by using the ISP, one or more cameras 193, the video codec, the GPU, one or more display screens 194, the application processor, and the like.

The NPU is a neural-network (neural-network, NN) computing processor, quickly processes input information by referring to a structure of a biological neural network, for example, a transmission mode between neurons in a human brain, and may further continuously perform self-learning. The NPU may be used to implement an application such as intelligent cognition of the electronic device 100, for example, image recognition, facial recognition, voice recognition, and text understanding.

The external memory interface 120 may be configured to connect to an external storage card, for example, a micro SD card, to expand a storage capability of the electronic device 100. The external storage card communicates with the processor 110 through the external memory interface 120, to implement a data storage function. For example, data files such as music, photos, and videos are stored in the external storage card.

The internal memory 121 may be configured to store one or more computer programs, and the one or more computer programs include instructions. The processor 110 may run the instructions stored in the internal memory 121, to enable the electronic device 100 to perform various function applications, data processing, and the like.

The sensor 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The gyroscope sensor 180B may be configured to determine a motion posture of the electronic device 100. In some embodiments, an angular velocity of the electronic device 100 around three axes (namely, x, y, and z axes) may be determined by using the gyroscope sensor 180B. The gyroscope sensor 180B may be used for image stabilization during shooting. The gyroscope sensor 180B may also be used in navigation, a motion sensing game scenario, and the like.

The magnetic sensor 180D is configured to detect magnetic field strength of a magnet, to obtain magnetic force data, and detect a physical status of a foldable screen of the electronic device 100 by using the magnetic force data. The magnet is configured to generate a magnetic field. In this embodiment of this application, the magnetic sensor 180D may be arranged in, for example, a body corresponding to a backplane shown in (1) of FIG. 19, and the magnet may be arranged in, for example, a body corresponding to a first screen shown in (1) of FIG. 19. The magnet may enable the magnetic sensor 180D to detect the magnetic force data. As a status of the foldable screen is changed, a distance between the magnetic sensor 180D and the magnet is changed correspondingly, and the magnetic field strength of the magnet detected by the magnetic sensor 180D is also changed. Further, a smart sensorhub may determine a physical status of the foldable screen based on the magnetic force data obtained by the magnetic sensor 180D under the action of the magnetic field of the magnet. The physical status includes, for example, an unfolded state, a bracket state, or a folded state (closed state). In some embodiments, the sensor 180 may further include a Hall sensor. The Hall sensor may also be configured to detect the magnetic field strength of the magnet, output a high/low level, and determine the physical status of the foldable screen of the electronic device 100 based on the high/low level.

The acceleration sensor 180E may detect an acceleration value of the electronic device 100 in each direction (generally in three axes). When the electronic device 100 is stationary, a magnitude and a direction of gravity may be detected. The acceleration sensor may be further configured to recognize an attitude of the electronic device, and is applied to an application such as switching between landscape orientation and portrait orientation or a pedometer.

The optical proximity sensor 180G may include, for example, a light-emitting diode (LED) and an optical detector such as a photodiode. The light-emitting diode may be an infrared light-emitting diode. The electronic device 100 may emit infrared light by using the light-emitting diode. The electronic device 100 detects infrared reflected light from a nearby object by using the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that a user holds the electronic device 100 close to an ear for a call, so that automatic screen-off is implemented to achieve power saving. The optical proximity sensor 180G may also be used in a smart cover mode or a pocket mode to automatically unlock or lock the screen.

The ambient light sensor 180L is configured to sense brightness of ambient light. The electronic device 100 may adaptively adjust brightness of the display screen 194 based on the perceived brightness of the ambient light. The ambient light sensor 180L may also be configured to automatically adjust white balance during shooting. The ambient light sensor 180L may further cooperate with the optical proximity sensor 180G to detect whether the electronic device 100 is in a pocket, to prevent an accidental touch.

The key 190 includes a power key, a volume key, and the like. The key 190 may be a mechanical key, or a touch-type key. The electronic device 100 may receive a button input, and generate a button signal input related to user setting and function control of the electronic device 100.

It may be understood that, the foregoing electronic device may also be referred to as a terminal device (terminal), a user equipment (user equipment, UE), a mobile station (mobile station, MS), a mobile terminal (mobile terminal, MT), or the like. The electronic device may be a mobile phone (mobile phone), an intelligent television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical care (remote medical), a wireless terminal in a smart grid (smart grid), a wireless terminal in transportation safety (transportation safety), a wireless terminal in a smart city (smart city), a wireless terminal in a smart home (smart home), or the like that has a touch screen. A specific technology and a specific device form that are used by the electronic device are not limited in embodiments of this application.

In embodiments of this application, to implement the gesture sensing function of the electronic device, hardware and software improvement needs to be made to the camera and the processor of the electronic device. The following first describes hardware improvement of the electronic device.

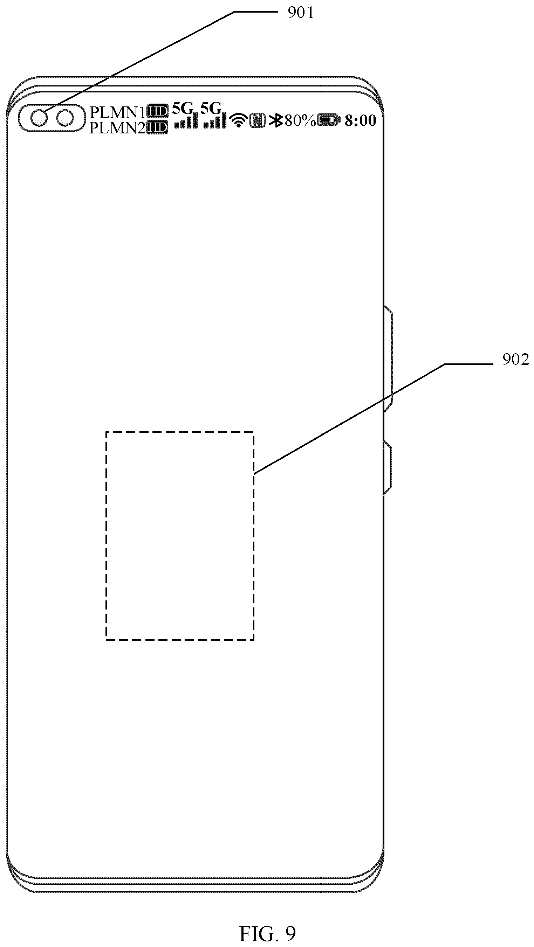

For example, FIG. 9 is a schematic diagram of a structure of an electronic device according to an embodiment of this application. As shown in FIG. 9, the electronic device may include an improved camera 901 and an improved processor 902. The improved camera 901 refers to adding a control circuit and an operating circuit corresponding to a shooting mode to a conventional camera module, to implement a low-power consumption configuration. For example, a shooting mode in the conventional camera module is a mode 1, and the camera module includes an operating circuit corresponding to the mode 1. If a shooting mode, namely, a mode 2 is added, switching between the mode 1 and the mode 2 is further involved correspondingly. Based on this, in addition to the operating circuit corresponding to the mode 1, the improved camera module includes an operating circuit corresponding to the added mode 2, and a control circuit corresponding to switching between the two modes. It should be understood that, according to an actual application requirement, more than two shooting modes may be set. This is not limited in embodiments of this application.

In a possible implementation, the improved camera 901 includes two operating modes: a first mode and a second mode. Resolution of an image acquired by the camera 901 in the first mode is less than resolution of an image acquired in the second mode, and a frame rate of the image acquired by the camera 901 in the first mode is less than a frame rate of the image acquired in the second mode. The camera 901 may perform switching between the two modes.

For example, in a gesture sensing scenario, if a condition for starting the camera is satisfied, the camera 901 operates in the first mode, to continuously acquire a first image with first resolution at a first frame rate (in other words, the camera performs resident scanning), to detect whether a gesture exists in a range of the camera 901, that is, detect whether a gesture exists in the first image. If it is detected that the gesture exists in the range of the camera 901, the camera 901 switches from the first mode to the second mode, continuously acquires a second image with second resolution at a second frame rate, and recognizes whether a gesture in the second image is a target gesture. In the example, the first frame rate is less than the second frame rate, and the first resolution is less than the second resolution.

In a possible implementation, the improved camera 901 includes three operating modes: a first mode, a second mode, and a third mode. Resolution of an image acquired by the camera 901 in the first mode is less than resolution of an image acquired in the second mode, and the resolution of the image acquired in the second mode is less than or equal to resolution of an image acquired in the third mode. A frame rate of the image acquired by the camera 901 in the first mode is less than a frame rate of the image acquired in the second mode, and the frame rate of the image acquired in the second mode is less than a frame rate of the image acquired in the third mode.

For example, in a gesture sensing scenario, if a condition for starting the camera is satisfied, the camera 901 operates in the first mode, to continuously acquire a first image with first resolution at a first frame rate, to detect whether a gesture exists in a range of the camera 901, that is, detect whether a gesture exists in the first image. If it is detected that the gesture exists in the range of the camera 901, the camera 901 switches from the first mode to the second mode, continuously acquires a second image with second resolution at a second frame rate, and recognizes whether a gesture in the second image is a start gesture of a target gesture. If it is recognized that the gesture in the second image is the start gesture, the camera 901 switches from the second mode to the third mode, continuously acquires a third image with third resolution at a third frame rate, and recognizes whether a gesture in the third image is an end gesture of the target gesture or recognizes whether gestures in the third image are sequentially an intermediate gesture and the end gesture of the target gesture. In the example, the first frame rate is less than the second frame rate, the second frame rate is less than the third frame rate, the first resolution is less than the second resolution, and the second resolution is less than or equal to the third resolution.

Based on the foregoing examples, the camera 901 may dynamically adjust a frame rate and resolution of an acquired image, to adapt to different detection requirements. For example, the camera 901 acquires an image at a relatively low frame rate and relatively low resolution, to detect whether a gesture exists in the range of the camera 901, and the camera 901 acquires an image at a relatively high frame rate and relatively high resolution, to recognize a specific category of a gesture in the image. For example, a lowest frame rate of the camera 901 may be 1 fps, and a highest frame rate may be 30 fps. Lowest resolution of the camera 901 may be 120×180, and highest resolution may be 480×640. In some other examples, the highest frame rate may alternatively be 240 fps, and the highest resolution may alternatively be 2736×3648.

It should be noted that, in embodiments of this application, a frame rate range and a resolution range of an image acquired by the camera are not specifically limited. In other words, a lowest frame rate and a highest frame rate of the image acquired by the camera may not be limited, and lowest resolution and highest resolution of the image acquired by the camera may not be limited. In actual application, the frame rate range and the resolution range may be properly set according to requirements.

It should be noted that, the camera 901 may be a front-facing camera of the electronic device, or may be a rear-facing camera of the electronic device. This is not limited in embodiments.

The improved processor 902 may be a system on chip (System on Chip, SoC). In this embodiment of this application, when the electronic device triggers the camera 901 to perform resident scanning to obtain an image in a current scenario, the camera 901 may send the image to the SoC for image analysis, to detect whether a gesture exists in the image, detect a category of the gesture, and the like.

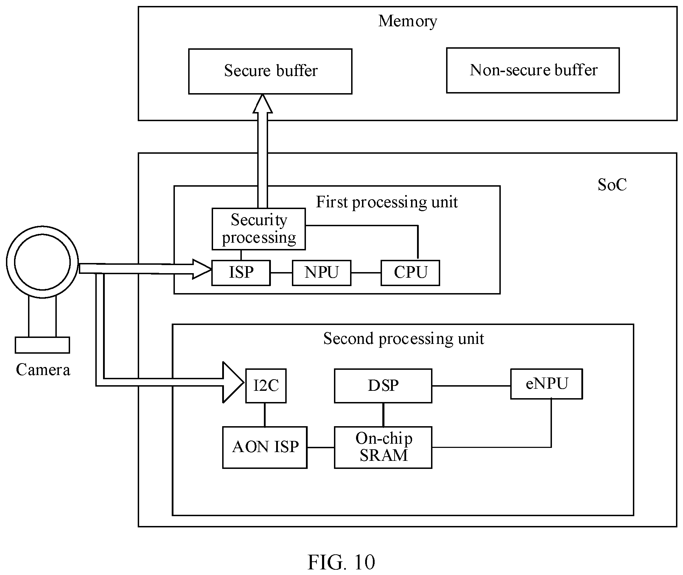

To achieve low power consumption, the SoC may support a AON ISP (Always On ISP) with low power consumption. Refer to FIG. 10. The camera 901 transmits the image to the AON ISP. The AON ISP performs no image effect processing other than format conversion on the image, and then stores the image after the format conversion in an on-chip static random-access memory (on-chip Static Random-Access Memory, on-chip SRAM). The SoC may also support an ultra-low-power consumption core, and calculation, algorithm operation, and image storage all operate in a low-power consumption mode. In addition, the SoC may also support an embedded neural network processor eNPU (emdeded NPU) with low power consumption.

The following describes in detail the SoC in embodiments of this application.

For example, FIG. 10 is a schematic diagram of a structure of an SoC according to an embodiment of this application. As shown in FIG. 10, the SoC includes a first processing unit and a second processing unit. The first processing unit includes an image signal processor ISP, a neural network processor NPU, and a central processing unit CPU. The second processing unit includes an I2C bus interface, an AON ISP, an on-chip SRAM, a digital signal processor DSP, and an eNPU. In the Soc, power consumption of the second processing unit is lower than power consumption of the first processing unit. Specifically, power consumption of the eNPU in the second processing unit is lower than power consumption of the NPU in the first processing unit, and power consumption of the AON ISP in the second processing unit is lower than power consumption of the ISP in the first processing unit.

In an example, the first processing unit may be configured to process the second image with the second resolution acquired by the camera 901. For example, in a normal shooting mode, the camera 901 acquires the second image with the second resolution, and after the IPS processes the second image with the second resolution, the NPU performs recognition on the processed second image with the second resolution, for example, recognizes the category of the gesture in the second image. Before the first processing unit sends data (for example, image data) to the memory, security processing (for example, encryption processing) may be performed, and the data after the security processing may be stored in a secure buffer (buffer) of the memory.

In an example, the second processing unit may be configured to process the first image with the first resolution acquired by the camera 901. For example, in a low-power consumption shooting mode, the camera 901 acquires the first image with the first resolution, the AON ISP obtains the first image with the first resolution through the I2C bus interface, and after the AON ISP processes the first image with the first resolution, the eNPU detects the processed first image with the first resolution, for example, detects whether the gesture exists in the first image. The on-chip SRAM in the second processing unit may be configured to store the processed first image with the first resolution, and the DSP may be configured to notify the eNPU to perform image detection, receive a detection result reported by the eNPU, and report the detection result to an upper layer application. The second processing unit uses a low-power consumption configuration, to reduce power consumption of the electronic device.

It should be noted that, a format of image data transmitted between the first processing unit or the second processing unit and the camera is not limited in embodiments of this application. For example, the image data may be camera serial interface (camera serial interface, CSI) mobile industry processor interface (mobile industry processor interface, MIPI) data.

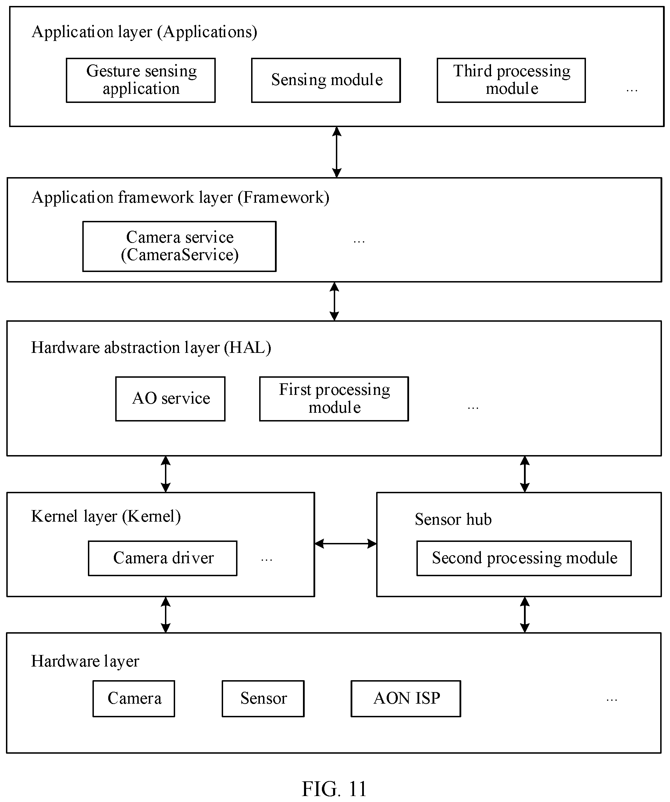

A software system of the electronic device may use a layered architecture, an event-driven architecture, a micro core architecture, a micro service architecture, or a cloud architecture. In this embodiment of this application, a software structure of the electronic device is described by using an example in which the software system using the layered architecture is an Android system. FIG. 11 is a schematic diagram of a structure of an electronic device according to an embodiment of this application. In a layered architecture, a software system of the electronic device is classified into a plurality of layers, and each layer has a clear role and task. The layers communicate with each other through a software interface.

Refer to FIG. 11. The electronic device in this embodiment of this application includes an application layer (Applications), an application framework layer (Application Framework), a hardware abstraction layer (Hardware Abstraction Layer, HAL), a kernel layer (Kernel), a sensor control center (Sensorhub), and a hardware layer.

The application framework layer may include series of applications. The application layer invokes an application programming interface (application programming interface, API) provided by the application framework layer, to run the applications.

In this embodiment of this application, the application layer may include a gesture sensing application and a sensing module. The gesture sensing application is connected to the sensing module. The gesture sensing application is registered in the sensing module, and the sensing module performs state management delivery and data transmission. For example, when the sensing module learns from a second processing module in the Sensorhub that a gesture exists in a range of a camera, the sensing module notifies a first processing module in the HAL, so that the first processing module recognizes a category of the gesture, and finally the sensing module reports a recognition result to the gesture sensing application.

In some embodiments, the application layer further includes another application (not shown in FIG. 11), for example, a gaze not-screen-off application, or a gaze always on display (always on display, AOD) application. In a possible case, a plurality of applications correspond to a same algorithm. For example, the gaze not-screen-off application and the gaze AOD application correspond to a gaze detection algorithm. The sensing module may be configured to uniformly schedule and manage the gaze detection algorithm. In another possible case, different applications correspond to different algorithms. For example, the gesture sensing application corresponds to a gesture recognition algorithm (including two algorithms for recognizing whether a gesture exists and recognizing a category of a gesture), and the gaze not-screen-off application corresponds to a gaze detection algorithm. The two algorithms involve obtaining image data from an underlying camera, and the sensing module may be configured to schedule and manage priorities of the plurality of algorithms. There is a possibility that priorities of the gesture recognition algorithm and the gaze detection algorithm are the same. The sensing module may notify the underlying camera to report the image data to both the gesture sensing application and the gaze not-screen-off application. In this embodiment, the algorithm for recognizing whether a gesture exists is deployed in the second processing module, and the algorithm for recognizing a category of a gesture is deployed in the first processing module. The algorithms shown in this embodiment are merely examples.

In some embodiments, if the electronic device includes a foldable screen, the application layer further includes a third processing module. The third processing module is configured to obtain a physical status of the foldable screen reported by the second processing module, and statuses (on or off) of a camera on an inner screen and a camera on an outer screen. In addition, the third processing module is further configured to notify the first processing module of the statuses of the camera on the inner screen and the camera on the outer screen.

In some embodiments, the applications may further include a camera, a gallery, a calendar, calls, maps, navigation, WLAN, Bluetooth, music, videos, SMS information, and the like. The application may be a system application, or may be a third-party application. This is not limited in embodiments of this application.

The application framework layer provides an API and a programming framework for the applications at the application layer. The application framework layer includes some predefined functions. As shown in FIG. 11, the application framework layer may include a camera service (CameraService). The camera service is configured to schedule and manage priorities of all applications that need to use a camera.

In some embodiments, the application framework layer may further include, for example, a window manager, a content provider, a resource manager, a notification manager, and a view system. This is not limited in embodiments of this application.

The hardware abstraction layer may include an AO (always on) service and the first processing module. The AO service may be configured to control enabling or disabling of the algorithm for recognizing a category of a gesture in the first processing module, control enabling or disabling of the algorithm for recognizing whether a gesture exists in the second processing module, and perform data transmission between upper and lower layers. The first processing module may be configured to process an image with relatively high resolution and/or a relatively high frame rate, such as the second image, to detect a category of a gesture in the second image. The first processing module is further configured to switch a camera mode. For example, the first processing module receives a second indication from the sensing module, and controls the camera to switch from a first mode to a second mode. For another example, the first processing module detects that the gesture is a start gesture of a target gesture, and controls the camera to switch from the second mode to a third mode.

The kernel layer is a layer between hardware and software. The kernel layer is configured to drive hardware, so that the hardware operates. In this embodiment of this application, the kernel layer may include a camera driver. The camera driver is configured to drive the camera of the electronic device to operate in the first mode or the second mode, to acquire images with different frame rates and/or resolution.

In addition, the kernel layer may further include a display driver, an audio driver, a sensor driver, a motor driver, and the like. This is not limited in embodiments of this application. The sensor driver may drive, for example, an optical proximity sensor to emit an optical signal to detect whether a user currently holds the electronic device to approach an ear for a call, and the like. The sensor driver may further drive, for example, a gyroscope sensor to detect attitude data of the electronic device. The sensor driver may further drive, for example, an ambient light sensor to detect brightness of ambient light to detect whether the electronic device is in a dark environment. The dark environment includes, for example, that the mobile phone is in a pocket.

The Sensorhub is configured to implement centralized control on sensors, to reduce a load of the CPU. The Sensorhub is equivalent to a microprogrammed control unit (Microprogrammed Control Unit, MCU). The MCU may run a program configured to drive a plurality of sensors to operate. In other words, the Sensorhub may support a capability of mounting a plurality of sensors. The Sensorhub may be used as an independent chip placed between the CPU and various sensors, or may be integrated into an application processor (application processor, AP) in the CPU.

In this embodiment of this application, the Sensorhub may include the second processing module. The second processing module may be configured to process an image with relatively low resolution and/or a relatively low frame rate, such as the first image, to detect whether a gesture exists in the first image. Compared with the first processing module, the second processing module is a low-power consumption processing module, and the second processing module runs in a resident form or in a low-power consumption form. In an example, when a gesture sensing function is enabled, the second processing module is further configured to obtain data reported by various sensors, and determine various statuses of the electronic device based on the data of the various sensors, for example, a screen status, an unlocking status, and a use status. If a status of the device satisfies a first condition, the second processing module may send a first shooting instruction to a camera, to indicate the camera to perform resident image scanning in a low-power consumption shooting mode (for example, the first mode), to detect whether a gesture exists in a range of the camera. In an example, for a foldable device, the second processing module may determine whether to send a first shooting instruction to a camera (a camera on an inner screen or an outer screen) by detecting a physical status of a foldable screen, a screen status, and whether a state of the device satisfies a second condition. In an example, when the second processing module detects that a physical status of a screen of a mobile phone with a foldable screen is changed, for example, from a folded state to an unfolded state or from the unfolded state to the folded state, the second processing module may control a camera of the mobile phone with the foldable screen (for example, a camera on an outer screen of the mobile phone and/or a camera on an inner screen of the mobile phone) to be started or closed.

The hardware layer may include, for example, the camera, the various sensors, and the AON ISP.

It may be understood that, the layers in the layer structure shown in FIG. 11 and the modules or components included in each layer do not constitute a specific limitation on the electronic device. In other embodiments, the electronic device may include more or fewer layers than shown in the figure, and each layer may include more or fewer components, which is not limited in this application. The modules included in each layer shown in FIG. 11 are modules involved in embodiments of this application, and the modules included in each layer do not constitute a limitation on the structure of the electronic device and module deployment layers (an example for description). In some embodiments, the modules shown in FIG. 11 may be deployed separately, or a plurality of modules may be deployed together. Division of the modules in FIG. 11 is an example. In some embodiments, names of the modules shown in FIG. 11 are examples for description.

Based on the structure of the electronic device shown above, the gesture sensing method provided in embodiments of this application is described below with reference to specific embodiments. The following embodiments may be mutually combined, and same or similar concepts or processes may not be repeatedly described in some embodiments.

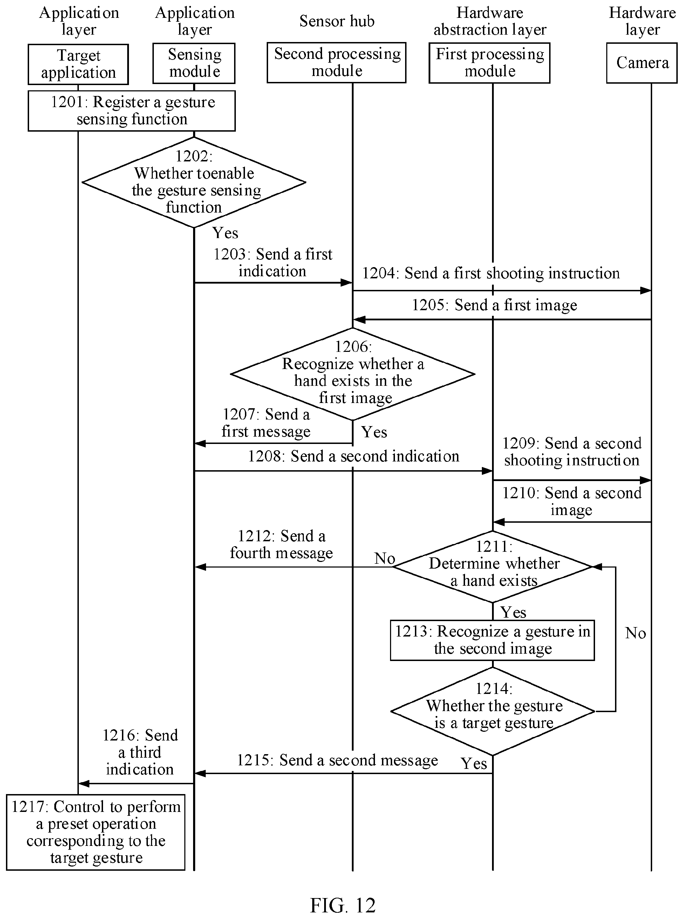

FIG. 12 is a schematic flowchart of a gesture sensing method according to an embodiment of this application. As shown in FIG. 12, the gesture sensing method provided in this embodiment of this application includes the following steps.

Step 1201: A target application registers a gesture sensing function in a sensing module.

In this embodiment, the target application is a gesture sensing application at an application layer. In some embodiments, the target application obtains information about the gesture sensing function from a server (or referred to as a cloud). After obtaining the information about the gesture sensing function, the target application may register the gesture sensing function in the sensing module, so that the sensing module runs in a resident manner and performs items related to gesture sensing. The information about the gesture sensing function includes code information for implementing the gesture sensing function, and may further include information such as preset operations corresponding to different air gesture operations.

Step 1202: The sensing module determines whether to enable the gesture sensing function.

If the sensing module determines to enable the gesture sensing function, Step 1203 is performed.

For example, refer to FIG. 5A and FIG. 5B. If a user selects to enable the gesture sensing function on a setting interface of a system application, the system application may send a notification to the sensing module, so that the sensing module learns that the mobile phone has enabled the gesture sensing function.

Step 1203: The sensing module sends a first indication to a second processing module.

The first indication indicates the second processing module to detect whether a recognizable code exists in a range of a camera of an electronic device. The sensing module sends the first indication, to control to start the second processing module, including module power-on, operating scenario delivery, resource preparation, and the like.

Step 1204: The second processing module sends a first shooting instruction to the camera in response to the first indication, where the first shooting instruction indicates the camera to operate in a first mode.

The second processing module sends the first shooting instruction, to control to start the camera, including camera power-on, mode switching, image output resolution, frame rate setting, and the like. The first mode is a low-power consumption shooting mode. The camera continuously acquires an image, that is, a first image, at a relatively low frame rate and/or relatively low resolution in the first mode.

Step 1205: The camera sends the first image to the second processing module.

The camera acquires, in response to the first shooting instruction, the first image with first resolution at a first frame rate in the first mode. For example, the first frame rate may be set to 5 fps, and the first resolution may be set to 120×180 or 640×480.

Step 1206: The second processing module recognizes whether a gesture exists in the first image.

If the second processing module recognizes that the gesture exists in the first image, Step 1207 is performed. Otherwise, the second processing module continues to perform Step 1206, unless the camera is controlled to be closed.

In some embodiments, the second processing module is preset with a first gesture recognition model. The second processing module performs recognition on the first image by using the first gesture recognition model, and determines whether the gesture exists in the first image based on a recognition result output by the first gesture recognition model.

In some embodiments, the first gesture recognition model may be trained by using a lightweight neural network model, to recognize whether a gesture exists in an image. The first gesture recognition model may be deployed on an eNPU of the second processing module, and has good real-time performance.

In an example, a process of training the first gesture recognition model may include the following steps.

Step a: Construct a training set and a test set of the first gesture recognition model, where the training set or the test set includes sample images and labeling results (that is, whether a gesture exists in a sample image) corresponding to the sample images, and the sample images in the training set are different from the sample images in the test set.

Step b: Train the first gesture recognition model based on an initial first gesture recognition model and the training set. Specifically, the first gesture recognition model is trained by using a sample image in the training set as an input of the initial first gesture recognition model and using a labeling result corresponding to the sample image in the training set as an output of the initial first gesture recognition model.

Step c: Perform verification on a prediction result of the first gesture recognition model based on the first gesture recognition model trained in Step b and the test set, and stop training the first gesture recognition model when a model loss function converges.

Step 1207: The second processing module sends a first message to the sensing module, where the first message notifies the sensing module that the gesture exists in the range of the camera of the electronic device.

Step 1208: The sensing module sends a second indication to a first processing module.

The second indication indicates the first processing module to recognize a category of the gesture in the range of the camera. The second processing module sends the second indication, to control to start the first processing module, including module power-on, operating scenario delivery, resource preparation, and the like. In this embodiment, after the second processing module recognizes that a gesture exists in the range of the camera, the first processing module recognizes whether the gesture is a target gesture. The target gesture includes, for example, a start gesture, an intermediate gesture, and an end gesture of the target gesture.

Step 1209: The first processing module sends a second shooting instruction to the camera in response to the second indication, where the second shooting instruction indicates the camera to operate in a second mode.

The first processing module sends the second shooting instruction, to control the camera to perform mode switching, that is, switch from the first mode to the second mode. The camera continuously acquires an image, that is, a second image, at a relatively high frame rate and/or relatively high resolution in the second mode.

Step 1210: The camera sends the second image to the first processing module.

The camera acquires, in response to the second shooting instruction, the second image with second resolution at a second frame rate in the second mode, and sends the second image to the first processing module. In this embodiment, the second image includes a plurality of images. For example, the second frame rate may be set to 30 fps, and the second resolution may be set to 1920×1080.

Step 1211: The first processing module determines whether a hand exists in the second image.

If it is determined that the hand exists in the second image, Step 1213 is performed. If it is determined that the hand does not exist in the second image, Step 1212 is performed.

Step 1212: The first processing module sends a fourth message to the sensing module, where the fourth message notifies the sensing module that the hand does not exist in the range of the camera.

Step 1213: The first processing module recognizes a gesture in the second image.

Step 1214: The first processing module determines whether the gesture is the target gesture.

If it is determined that the gesture is the target gesture, Step 1215 is performed.

If it is determined that the gesture is not the target gesture, Step 1211 is performed.

In some embodiments, the first processing module is preset with a second gesture recognition model. The first processing module performs recognition on the gesture in the second image by using the second gesture recognition model, and determines, based on a recognition result output by the second gesture recognition model, whether the gesture in the second image is the target gesture.

In an example, the second gesture recognition model may be trained by using a lightweight neural network model based on a deep learning method, to recognize a category of a gesture in an image. In an example, the second gesture recognition model may include a first model, a second model, and a third model. The first model is configured to recognize an overall frame and a direction of a hand, the second model is configured to recognize three-dimensional hand nodes, and the third model is configured to perform classification on the recognized hand nodes, to determine a specific category of the gesture.

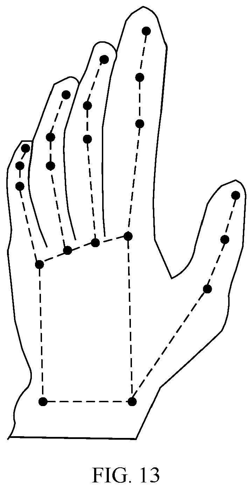

The first model may be a model that can recognize a single-frame image, and mainly provides an accurately cropped palm image for the second model. In addition, the first model can also recognize a plurality of different palm sizes, to recognize blocking of a hand, and can accurately position the hand through recognition of an arm, a torso, a personal feature, or the like. The second model may be a Landmark model. The model may recognize 21 hand nodes and positional blocking among the nodes. For example, FIG. 13 is a schematic diagram of hand nodes. The second model may recognize coordinates of the 21 nodes of the hand. The third model may infer actions such as straightening or bending of each finger based on data of the hand nodes extracted by the second model, and perform matching on the actions and a preset gesture, to predict a category of the gesture.

In an example, the second gesture recognition model may be deployed on an NPU of the first processing module, and has good real-time performance.

In some embodiments, that the first processing module recognizes a gesture in the second image may include: recognizing a hand area from the second image, to remove a non-hand area in the second image; and performing gesture analysis on the recognized hand area, for example, inputting an image of the recognized hand area into the second gesture recognition model, to determine a category of the gesture in the image.

In some embodiments, the first processing module may separate the foreground (that is, the hand area) from the background (that is, the non-hand area) in the second image by using background subtraction.

Step 1215: The first processing module sends a second message to the sensing module, where the second message indicates that the target gesture is recognized in the second image.

In an example, the second message includes an identifier corresponding to the target gesture.

Step 1216: The sensing module sends a third indication to the target application, where the third indication indicates that the target gesture is recognized in the second image.

In an example, the third indication includes the identifier corresponding to the target gesture.

Step 1217: The target application controls to perform a preset operation corresponding to the target gesture.

The target application stores a correspondence between the target gesture and the preset operation (for details, refer to the examples in the foregoing embodiments). In response to the third indication, the target application performs the preset operation corresponding to the target gesture.

In the foregoing embodiment, if the electronic device has registered the gesture sensing function and has enabled the gesture sensing function, the sensing module may send the first shooting instruction to the camera by using the second processing module (a low-power consumption processing module), so that the camera acquires the first image at the relatively low frame rate and/or the relatively low resolution. If it is recognized that the gesture exists in the first image, the second processing module may notify the first processing module, so that the first processing module sends the second shooting instruction to the camera, so that the camera acquires the second image at the relatively high frame rate and/or the relatively high resolution. The first processing module recognizes the category of the gesture in the second image, and notifies, if the gesture in the second image is the target gesture, the application to perform the preset operation corresponding to the target gesture.

In the foregoing solution, after the user enables the gesture sensing function, the electronic device automatically detects an air gesture with low power consumption, that is, detects whether a gesture exists. After the gesture is detected, an image with relatively high resolution is acquired, to detect a category of the gesture based on the image with the relatively high resolution. If the gesture is the target gesture, the preset operation corresponding to the target gesture is performed, so that the device implements automatic sensing and gesture recognition, thereby satisfying a requirement of the user to control the device in air. Because both the camera and the second processing module use low-power consumption configurations, power consumption of executing the solution is extremely low.

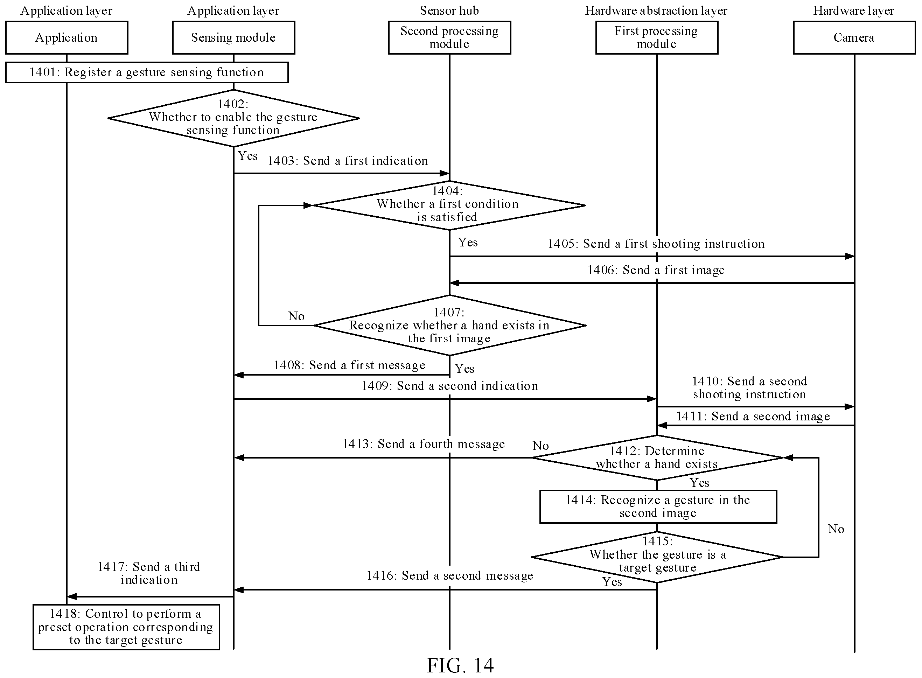

FIG. 14 is a schematic flowchart of a gesture sensing method according to an embodiment of this application. Based on the embodiment shown in FIG. 12, as shown in FIG. 14, the gesture sensing method provided in this embodiment of this application includes the following steps.

Step 1401: A target application registers a gesture sensing function in a sensing module.

Step 1402: The sensing module determines whether to enable the gesture sensing function.

If the sensing module determines to enable the gesture sensing function, Step 1403 is performed.

Step 1403: The sensing module sends a first indication to a second processing module, where the first indication indicates the second processing module to detect whether a gesture exists in a range of a camera of an electronic device.

Step 1404: The second processing module determines whether a first condition is satisfied.

If the second processing module determines that the first condition is satisfied, Step 1405 is performed. Otherwise, the second processing module continues low power detection, to determine whether the first condition is satisfied.

In this embodiment, the first condition includes at least one of the following:
a screen status of the electronic device is an on state;
the electronic device has been unlocked;
a time difference between an optical signal emitted by an optical proximity sensor of the electronic device and a reflected signal of the optical signal is greater than a first threshold, and/or signal strength of the reflected signal is less than a second threshold, and/or the receive light sensor has not received the reflected signal;
detected data of an ambient light sensor of the electronic device is greater than a third threshold;
a screen of the electronic device faces a preset direction; or
the electronic device runs the target application.

In this embodiment, if the electronic device has enabled the gesture sensing function and the first condition is satisfied, the camera of the electronic device is triggered to continuously acquire a first image. The first condition is added, to prevent the camera of the electronic device from continuously acquiring the first image when unnecessary, thereby further reducing power consumption of the device.

Step 1405: The second processing module sends a first shooting instruction to the camera, where the first shooting instruction indicates the camera to operate in a first mode.

In some embodiments, if the electronic device is a foldable device, the foldable device includes an inner screen and an outer screen, a first camera is correspondingly arranged on the inner screen, and a second camera is correspondingly arranged on the outer screen.

In a possible case, Step 1404 may be replaced with: The second processing module detects that the inner screen of the electronic device is in an on state and the electronic device is in an unfolded state. Correspondingly, Step 1405 may be: The second processing module sends a first shooting instruction to the first camera. In some embodiments, before the second processing module sends a first shooting instruction to the first camera, the method further includes: detecting that a status of the electronic device satisfies a second condition, where the second condition includes at least one of the following: the electronic device has been unlocked; a time difference between an optical signal emitted by an optical proximity sensor (on the inner screen) of the electronic device and a reflected signal of the optical signal is greater than a first threshold, and/or signal strength of the reflected signal is less than a second threshold, and/or the receive light sensor has not received the reflected signal; detected data of an ambient light sensor of the electronic device is greater than a third threshold; the inner screen of the electronic device faces a preset direction; or the electronic device runs a preset application.

In a possible case, Step 1404 may be replaced with: The second processing module detects that the outer screen of the electronic device is in an on state and the electronic device is in a folded state. Correspondingly, Step 1405 may be: The second processing module sends a first shooting instruction to the second camera. In some embodiments, before the second processing module sends a first shooting instruction to the second camera, the method further includes: detecting that a status of the electronic device satisfies a second condition, where the second condition includes at least one of the following: the electronic device has been unlocked; a time difference between an optical signal emitted by an optical proximity sensor (on the outer screen) of the electronic device and a reflected signal of the optical signal is greater than a first threshold, and/or signal strength of the reflected signal is less than a second threshold, and/or the receive light sensor has not received the reflected signal; detected data of an ambient light sensor of the electronic device is greater than a third threshold; the outer screen of the electronic device faces a preset direction; or the electronic device runs a preset application.

Step 1406: The camera sends the first image to the second processing module.

Step 1407: The second processing module recognizes whether a gesture exists in the first image.

If the second processing module recognizes that the gesture exists in the first image, Step 1408 is performed.

If the second processing module recognizes that the gesture does not exist in the first image, Step 1404 is performed.

Step 1408: The second processing module sends a first message to the sensing module, where the first message notifies the sensing module that the gesture exists in the range of the camera of the electronic device.

Step 1409: The sensing module sends a second indication to a first processing module, where the second indication indicates the first processing module to recognize a category of the gesture in the range of the camera.

Step 1410: The first processing module sends a second shooting instruction to the camera in response to the second indication, where the second shooting instruction indicates the camera to operate in a second mode.

Step 1411: The camera sends the second image to the first processing module.

Step 1412: The first processing module determines whether a hand exists in the second image.

If it is determined that the hand exists in the second image, Step 1414 is performed. If it is determined that the hand does not exist in the second image, Step Step 1413.

Step 1413: The first processing module sends a fourth message to the sensing module, where the fourth message notifies the sensing module that the hand does not exist in the range of the camera.

Step 1414: The first processing module recognizes a gesture in the second image.

Step 1415: The first processing module determines whether the gesture is the target gesture.

If it is determined that the gesture is the target gesture, Step 1416 is performed.

If it is determined that the gesture is not the target gesture, Step 1412 is performed.

Step 1416: The first processing module sends a second message to the sensing module, where the second message indicates that the target gesture is recognized in the second image.

Step 1417: The sensing module sends a third indication to the target application, where the third indication indicates that the target gesture is recognized in the second image.

Step 1418: The target application controls to perform a preset operation corresponding to the target gesture.

In the foregoing embodiment, if the electronic device has enabled the gesture sensing function and the first condition is satisfied, the sensing module may send the first shooting instruction to the camera by using the second processing module, so that the camera acquires the first image at a relatively low frame rate and/or relatively low resolution. If it is recognized that the gesture exists in the first image, the second processing module may notify the first processing module, so that the first processing module sends the second shooting instruction to the camera, so that the camera acquires the second image at a relatively high frame rate and/or relatively high resolution. The first processing module recognizes whether the gesture in the second image is the target gesture, and performs, if the gesture is the target gesture, the preset operation corresponding to the target gesture, so that the device implements automatic sensing and gesture recognition, thereby satisfying a function of operating the device by the user in air. Because both the camera and the second processing module use low-power consumption configurations, power consumption of executing the foregoing solution is extremely low. In addition, the first condition is set, the camera of the electronic device can be prevented from performing unnecessary gesture detection, thereby further reducing the power consumption of the device.

In some embodiments, the target gesture includes a first gesture and a second gesture, the first gesture is a start gesture of the target gesture, and the second gesture is an end gesture of the target gesture. If the first processing module recognizes that the gesture in the second image is the first gesture, the first processing module sends a third shooting instruction to the camera, where the third shooting instruction indicates the camera to run in a third mode, that is, the first processing module controls the camera to switch from the second mode to the third mode. The first processing module obtains a third image acquired by the camera in the third mode, and recognizes a category of a gesture in the third image. A recognition process is consistent with the foregoing process of recognizing the second image, and details are not described herein again. If the first processing module recognizes that the gesture in the third image is the second gesture, the first processing module sends a third message to the sensing module, so that the sensing module sends a fourth indication to the target application after receiving the third message, to indicate the target application to control the preset operation corresponding to the target gesture. In this embodiment, the third message indicates that the target gesture is recognized, and the fourth indication indicates the target gesture (an identifier corresponding to the target gesture). A case in which the target gesture includes three gestures is similar to this embodiment. Refer to an execution principle of two gestures.

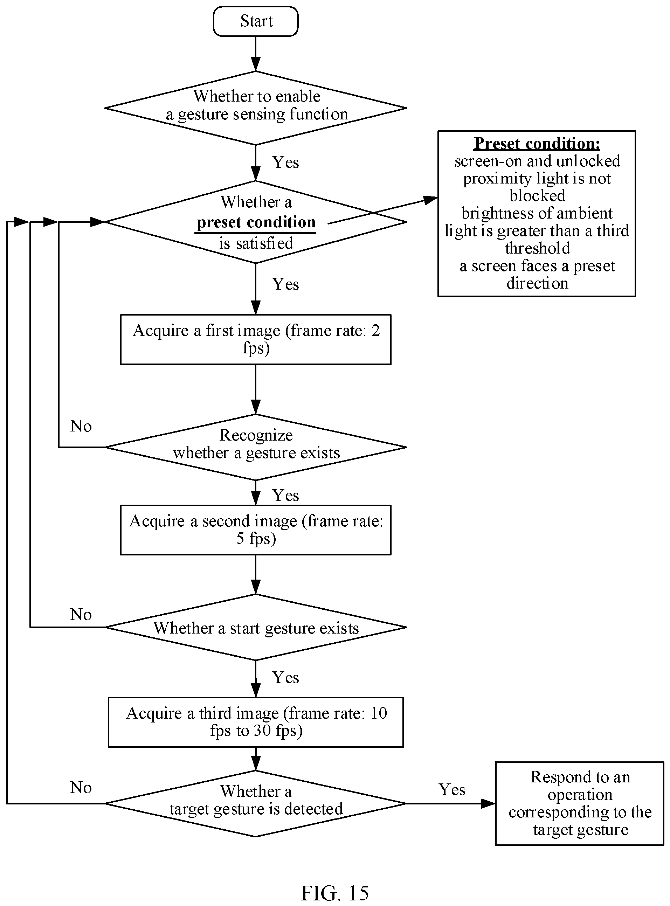

An embodiment of this application further provides a gesture sensing method. The gesture sensing method is described below with reference to FIG. 15.

FIG. 15 is a schematic flowchart of a gesture sensing method according to an embodiment of this application. As shown in FIG. 15, an electronic device determines whether a gesture sensing function is enabled, and determines, if the electronic device has enabled the gesture sensing function, whether a preset condition is satisfied. The preset condition includes: A screen of the electronic device is on, the electronic device has been unlocked, proximity light is not blocked, brightness of ambient light is greater than a third threshold, and the screen faces a preset direction. In this embodiment, that the proximity light is not blocked may be determined by detecting an optical signal emitted by an optical proximity sensor. For details, refer to the foregoing embodiments. Details are not described herein again. The preset direction includes a direction in which a user holds a mobile phone to browse interface content, a direction in which the user places the mobile phone on a desk to browse interface content, or the like. If the electronic device determines that the gesture sensing function has been enabled and the preset condition is satisfied, the electronic device controls a camera to acquire a first image, and detects whether a gesture exists in the first image, where a frame rate of the first image may be 2 fps. If it is detected that the gesture exists in the first image, the camera is controlled to acquire a second image, and it is detected whether a preset start gesture exists in the second image, where a frame rate of the second image may be 5 fps. Otherwise, the step of whether the preset condition is satisfied is performed. If it is detected that the preset start gesture exists in the second image, the camera is controlled to acquire a third image, where a frame rate of the third image may be any value ranging from 10 fps to 30 fps. Otherwise, the step of whether the preset condition is satisfied is performed. If it is detected that a preset target gesture exists in the third image, a preset operation corresponding to the target gesture is responded to. Otherwise, the step of whether the preset condition is satisfied is performed. The target gesture in this embodiment includes the start gesture, and may further include an intermediate gesture and an end gesture. In other words, the target gesture corresponds to a gesture change. The preset operation in this embodiment may be one of the operations described in the foregoing embodiments.

Based on the foregoing solution, after the gesture sensing function is enabled, the user can directly use an air gesture action in a range of a camera of the mobile phone when a specific condition is satisfied, to achieve an effect of controlling the mobile phone in air, thereby satisfying air operation requirements of the user in various scenarios, and improving use experience of the user.

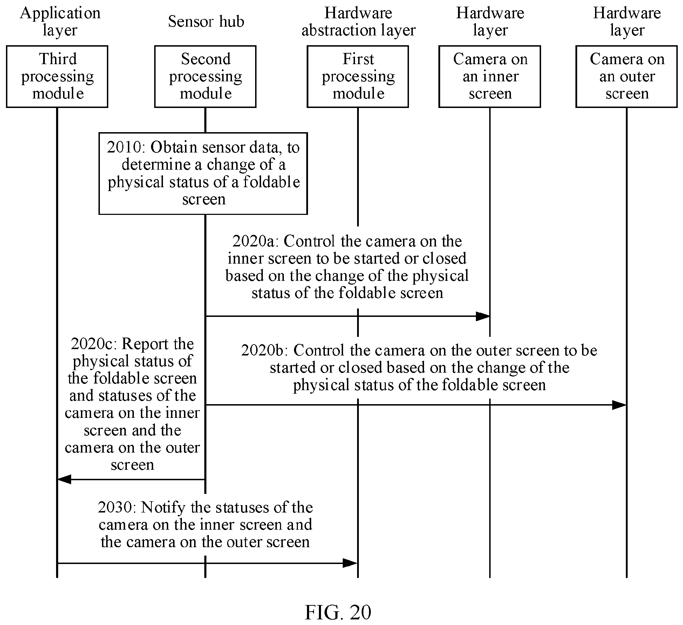

An embodiment of this application further provides a gesture sensing method. The method is applied to an electronic device with a flexible screen. The solution is described below by using a mobile phone with a foldable screen as an example. A set of cameras are respectively arranged on an inner screen and an outer screen of the mobile phone with the foldable screen, and to acquire image data. The gesture sensing method in this embodiment relates to processing logic of underlying modules of the device when a status of the foldable screen is changed, which is described below with reference to FIG. 20.

For example, FIG. 20 is a schematic flowchart of a gesture sensing method according to an embodiment of this application. As shown in FIG. 20, the gesture sensing method in this embodiment of this application may include the following steps.

Step 2010: A second processing module obtains sensor data, to determine a change of a physical status of the foldable screen.

In this embodiment, the sensor data includes, for example, a magnetic sensor, a Hall sensor, or the like. Whether the physical status of the foldable screen is changed is determined by obtaining the sensor data. That the physical status of the foldable screen is changed includes from a folded state to an unfolded state or from the unfolded state to the folded state.

Step 2020a: The second processing module controls a camera on the inner screen to be started or closed based on the change of the physical status of the foldable screen.

Step 2020b: The second processing module controls a camera on the outer screen to be started or closed based on the change of the physical status of the foldable screen.

In a possible implementation, if the physical status of the foldable screen is changed from the folded state to the unfolded state, the second processing module may control the camera on the inner screen to be started.

In a possible implementation, when the camera on the outer screen has been started, if the physical status of the foldable screen is changed from the folded state to the unfolded state, the second processing module may control the camera on the outer screen to be closed, and simultaneously control the camera on the inner screen to be started.

In a possible implementation, when the camera on the inner screen has been started, and if the physical status of the foldable screen is changed from the unfolded state to the folded state, the second processing module may control the camera on the inner screen to be closed, and simultaneously start the camera on the outer screen.

For example, the camera on the outer screen may be a camera 1 shown in FIG. 19, and the camera on the inner screen may be a camera 3 shown in FIG. 19.

Step 2020c: The second processing module reports, to a third processing module, the physical status of the foldable screen and statuses of the camera on the inner screen and the camera on the outer screen.

It should be pointed out that, an execution sequence of Step 2020a to Step 2020c is not limited in embodiments of this application.

Step 2030: The third processing module sends a notification to the first processing module, to notify the statuses of the camera on the inner screen and the camera on the outer screen.

This embodiment shows an interaction process of various modules in the mobile phone when the physical status of the screen of the mobile phone with the foldable screen is changed. Through the foregoing interaction, accurate control of a low-power consumption continuous image scanning function of the camera is implemented. In this way, when a user uses the mobile phone with the foldable screen, the mobile phone can recognize an air gesture operation of the user, thereby implementing control of the mobile phone in different use scenarios, such as audio and video playback control and picture display control, and improving use experience of the user.

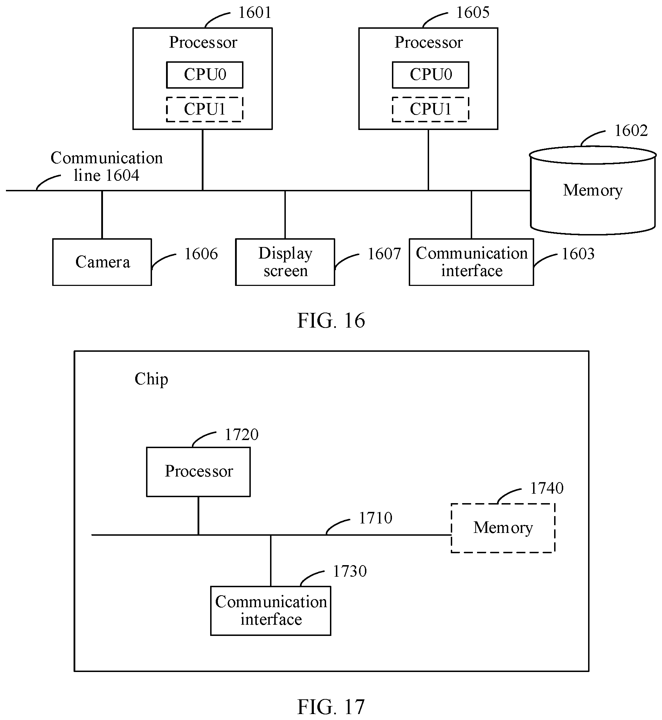

FIG. 16 is a schematic diagram of a structure of an electronic device according to an embodiment of this application. As shown in FIG. 16, the electronic device may include a camera 1606, a processor 1601, a communication line 1604, and at least one communication interface (for example, a communication interface 1603 in FIG. 16 is used as an example for description).

The camera 1606 may be configured to acquire images with different frame rates and/or resolution. The processor 1601 may be configured to detect whether a gesture exists and detect a specific category of a gesture in an image.

The processor 1601 may be a general-purpose central processing unit (central processing unit, CPU), a microprocessor, an application-specific integrated circuit (application-specific integrated circuit, ASIC), or one or more integrated circuits configured to control execution of a program in the solutions of this application. In some embodiments, the processor includes a first processing module and a second processing module, and power consumption of the first processing module is higher than power consumption of the second processing module; the second processing module is configured to detect whether a gesture exists in a range of the camera; and the first processing module is configured to recognize a category of the gesture in the range of the camera.

The communication line 1604 may include a circuit configured to transmit information between the foregoing components.

The communication interface 1603 uses any apparatus of a transceiver type to communicate with another device or a communication network such as an Ethernet, wireless local area networks (wireless local area networks, WLAN), and the like.

In some embodiments, the electronic device may further include a memory 1602.

For example, the memory 1602 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer. This is not limited thereto. The memory may exist independently, and is connected to the processor by the communication line 1604. The memory may alternatively be integrated with the processor.

The memory 1602 is configured to store computer-executable instructions for performing the solutions of this application, and is controlled and executed by the processor 1601. The processor 1601 is configured to execute the computer-executable instructions stored in the memory 1602 to implement the gesture sensing method provided in embodiments of this application.

In some embodiments, the electronic device further includes a display screen 1607. The display screen 1607 may be a foldable screen.

The computer-executable instructions in this embodiment of this application may also be referred to as application code. This is not specifically limited in embodiments of this application.

In an example, the processor 1601 may include one or more CPUs, for example, a CPU0 and a CPU1 in FIG. 16.

In an example, the electronic device may include a plurality of processors, for example, a processor 1601 and a processor 1605 in FIG. 16. Each of such processors may be a single-core processor (single-CPU), or may be a multi-core processor (multi-CPU). The processor herein may be one or more devices, circuits, and/or processing cores configured to process data (for example, computer program instructions).

FIG. 17 is a schematic diagram of a structure of a chip according to an embodiment of this application. As shown in FIG. 17, a chip 1700 includes one or more than two (including two) processors 1720 and a communication interface 1730.

In some implementations, the memory 1740 stores the following element: an executable module or a data structure, or a subset of the executable module or the data structure, or an extension set of the executable module or the data structure.

In this embodiment of this application, the memory 1740 may include a read-only memory and a random access memory, and provides instructions and data to the processor 1720. A part of the memory 1740 may further include a non-volatile random access memory (non-volatile random access memory, NVRAM).

In this embodiment of this application, the memory 1740, the communication interface 1730, and the memory 1740 are coupled together by a bus system 1710. In addition to a data bus, the bus system 1710 may further include a power bus, a control bus, a status signal bus, and the like. For ease of representation, all types of buses in FIG. 17 are marked as the bus system 1710.

The method described in this embodiment of this application may be applied to the processor 1720 or implemented by the processor 1720. The processor 1720 may be an integrated circuit chip, having a capability of processing a signal. In an implementation process, steps in the foregoing methods can be implemented by using a hardware integrated logical circuit in the processor 1720, or by using instructions in a form of software. The foregoing processor 1720 may be a general-purpose processor, (for example, a microprocessor or a conventional processor), a digital signal processor (digital signal processor, DSP), an application specific integrated circuit (application specific integrated circuit, ASIC), a field-programmable gate array (field-programmable gate array, FPGA), another programmable logic device, a discrete gate, a transistor logic device, or a discrete hardware component. The processor 1720 may implement or perform the methods, steps, and logical block diagrams disclosed in embodiments of the present invention.

In the foregoing embodiment, the instructions executed by the processor stored in the memory may be implemented in the form of a computer program product. The computer program product may be pre-written in the memory, or may be downloaded and installed in the memory in the form of software.

An embodiment of this application further provides a computer program product. The computer program product includes one or more computer instructions. When the computer program instructions are loaded and executed on an electronic device, the electronic device is enabled to perform the technical solutions in the foregoing embodiments. An implementation principle and a technical effect thereof are similar to those of the foregoing related embodiments. Details are not described herein again.

The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

An embodiment of this application further provides a computer-readable storage medium. The computer-readable storage medium stores computer instructions. When the computer instructions are run on an electronic device, the electronic device is enabled to perform the technical solutions in the foregoing embodiments. An implementation principle and a technical effect thereof are similar to those of the foregoing related embodiments. Details are not described herein again.

The computer-readable storage medium may include a computer storage medium and a communication medium, and may further include any medium that can transmit a computer program from one place to another. The computer-readable storage medium may include a compact disc read-only memory CD-ROM, a RAM, a ROM, an EEPROM, or another optical disc memory. The computer-readable storage medium may include a magnetic disk memory or another magnetic disk storage device. Any connection line may also be appropriately referred to as a computer-readable storage medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

In addition, it should be noted that, user information (including but not limited to user device information, user personal information, and the like) and data (including but not limited to data used for analysis, stored data, displayed data, and the like) involved in this application are information and data authorized by a user or fully authorized by all parties, and collection, use, and processing of relevant data need to comply with relevant laws, regulations, and standards of relevant countries and regions. In addition, corresponding operation entries are provided for the user to perform authorization or refuse.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A gesture sensing method, applied to an electronic device, the method comprising:
running, by a camera of the electronic device, in a first mode;
obtaining, by the electronic device, a first image acquired by the camera in the first mode, and detecting whether a gesture exists in the first image;
detecting, by the electronic device, that the gesture exists in the first image, and controlling the camera to switch from the first mode to a second mode;
obtaining, by the electronic device, a second image acquired by the camera in the second mode, and recognizing a category of a gesture in the second image; and
recognizing, by the electronic device, that the gesture in the second image is a target gesture, and controlling to perform a preset operation corresponding to the target gesture.

2. The method according to claim 1, wherein before the running, by a camera of the electronic device, in a first mode, the method further comprises: responding, by the electronic device, to a first operation of enabling a gesture sensing function.

3. The method according to claim 1 or 2, wherein
before the running, by a camera of the electronic device, in a first mode, the method further comprises:
detecting that a status of the electronic device satisfies a first condition, wherein the first condition comprises at least one of the following:
a screen status of the electronic device is an on state;
the electronic device has been unlocked;
a time difference between an optical signal emitted by an optical proximity sensor of the electronic device and a reflected signal of the optical signal is greater than a first threshold, and/or signal strength of the reflected signal is less than a second threshold, and/or the receive light sensor has not received the reflected signal;
detected data of an ambient light sensor of the electronic device is greater than a third threshold;
a screen of the electronic device faces a preset direction; or
the electronic device runs a preset application.

4. The method according to claim 1 or 2, wherein the electronic device is a foldable device, the foldable device comprises an inner screen and an outer screen, a first camera is correspondingly arranged on the inner screen, and a second camera is correspondingly arranged on the outer screen; and the running, by a camera of the electronic device, in a first mode comprises:
controlling the second camera to run in the first mode when it is detected that the outer screen of the electronic device is in an on state and the electronic device is in a folded state; or
controlling the first camera to run in the first mode when it is detected that the inner screen of the electronic device is in an on state and the electronic device is in an unfolded state.

5. The method according to claim 4, wherein before the controlling the first camera to run in the first mode or the controlling the second camera to run in the first mode, the method further comprises:
detecting that a status of the electronic device satisfies a second condition, wherein the second condition comprises at least one of the following:
the electronic device has been unlocked;
a time difference between an optical signal emitted by an optical proximity sensor of the electronic device and a reflected signal of the optical signal is greater than a first threshold, and/or signal strength of the reflected signal is less than a second threshold, and/or the receive light sensor has not received the reflected signal;
detected data of an ambient light sensor of the electronic device is greater than a third threshold;
the inner screen or the outer screen of the electronic device faces a preset direction; or
the electronic device runs a preset application.

6. The method according to claim 4 or 5, wherein the method further comprises:
when the second camera runs in the first mode, if it is detected that the electronic device is from the folded state to the unfolded state, controlling, by the electronic device, the first camera to run in the first mode, and closing the second camera; or
when the first camera runs in the first mode, if it is detected that the electronic device is from the unfolded state to the folded state, controlling, by the electronic device, the first camera to be closed, and controlling the second camera to run in the first mode.

7. The method according to any one of claims 1 to 6, wherein
the target gesture comprises a first gesture and a second gesture, the first gesture is a start gesture of the target gesture, and the second gesture is an end gesture of the target gesture; and the recognizing, by the electronic device, that the gesture in the second image is the first gesture, and controlling, by the electronic device, to perform a preset operation corresponding to the target gesture comprises:
recognizing, by the electronic device, that the gesture in the second image is the first gesture, and controlling the camera to switch from the second mode to a third mode;
obtaining, by the electronic device, a third image acquired by the camera in the third mode, and recognizing a category of a gesture in the third image; and
recognizing, by the electronic device, that the gesture in the third image is the second gesture, and controlling to perform the preset operation corresponding to the target gesture.

8. The method according to any one of claims 1 to 7, wherein
the running, by a camera of the electronic device, in a first mode comprises:
sending, by a sensing module of the electronic device, a first indication to a second processing module of the electronic device, wherein the first indication indicates the second processing module to detect whether a gesture exists in a range of the camera;
sending, by the second processing module, a first shooting instruction to the camera; and
running, by the camera, in the first mode in response to the first shooting instruction.

9. The method according to any one of claims 1 to 8, wherein the obtaining, by the electronic device, a first image acquired by the camera in the first mode, and detecting whether a gesture exists in the first image comprises:
obtaining, by the second processing module of the electronic device, the first image acquired by the camera in the first mode, and detecting whether the gesture exists in the first image.

10. The method according to any one of claims 1 to 9, wherein the detecting, by the electronic device, that the gesture exists in the first image, and controlling the camera to switch from the first mode to a second mode comprises:
detecting, by the second processing module of the electronic device, that the gesture exists in the first image, and sending, by the second processing module, a first message to the sensing module of the electronic device, wherein the first message notifies the sensing module that the gesture exists in the range of the camera;
sending, by the sensing module, a second indication to a first processing module of the electronic device, wherein the second indication indicates the first processing module to recognize the category of the gesture in the second image; and
sending, by the first processing module, a second shooting instruction to the camera in response to the second indication, wherein the second shooting instruction indicates the camera to run in the second mode.

11. The method according to any one of claims 1 to 10, wherein the obtaining, by the electronic device, a second image acquired by the camera in the second mode, and recognizing a category of a gesture in the second image comprises:
obtaining, by the first processing module of the electronic device, the second image acquired by the camera in the second mode, and recognizing the category of the gesture in the second image.

12. The method according to any one of claims 1 to 11, wherein the recognizing, by the electronic device, that the gesture in the second image is a target gesture, and controlling to perform a preset operation corresponding to the target gesture comprises:
recognizing, by the first processing module of the electronic device, that the gesture in the second image is the target gesture, and sending, by the first processing module, a second message to the sensing module of the electronic device, wherein the second message indicates that the target gesture is recognized in the second image;
sending, by the sensing module, a third indication to a target application of the electronic device, wherein the third indication indicates the target gesture; and
controlling, by the target application, to perform the preset operation corresponding to the target gesture.

13. The method according to any one of claims 3 to 6, wherein a second processing module of the electronic device detects the status of the electronic device.

14. The method according to claim 7, wherein
the controlling, by the electronic device, the camera to switch from the second mode to a third mode comprises: controlling, by a first processing module of the electronic device, the camera to switch from the second mode to the third mode;
the obtaining, by the electronic device, a third image acquired by the camera in the third mode, and recognizing a category of a gesture in the third image comprises: obtaining, by the first processing module, the third image acquired by the camera in the third mode, and recognizing the category of the gesture in the third image; and
if the gesture in the third image is the second gesture, the controlling, by the electronic device, to perform a preset operation corresponding to the target gesture comprises: if the gesture in the third image is the second gesture, sending, by the first processing module, a third message to a sensing module of the electronic device, wherein the third message indicates that the target gesture is recognized; sending, by the sensing module, a fourth indication to a target application of the electronic device, wherein the fourth indication indicates the target gesture; and controlling, by the target application, to perform the preset operation corresponding to the target gesture.

15. An electronic device, comprising: a camera, a memory, and a processor, wherein
the camera is configured to acquire images with different frame rates and/or resolution, and the processor is configured to invoke a computer program in the memory, to perform the gesture sensing method according to any one of claims 1 to 14.

16. The electronic device according to claim 15, wherein the processor comprises a first processing module and a second processing module, and power consumption of the first processing module is higher than power consumption of the second processing module;
the second processing module is configured to detect whether a gesture exists in a range of the camera; and
the first processing module is configured to recognize a category of the gesture in the range of the camera.

17. A computer-readable storage medium, storing computer instructions, wherein when the computer instructions are run on an electronic device, the electronic device is enabled to perform the method according to any one of claims 1 to 14.

18. A chip, comprising a processor, wherein the processor is configured to invoke a computer program in a memory, to perform the method according to any one of claims 1 to 14.
